# EUROPÄISCHE PATENTSCHRIFT

(11) **EP 2 635 360 B1**
(45) Veröffentlichungstag und Bekanntmachung des Hinweises auf die Patenterteilung: **23.05.2018**
(21) Anmeldenummer: 11788083.1
(22) Anmeldetag: 31.10.2011
(51) Int. Cl.: B01D 29/21, B01D 29/96, B01D 35/153, B01D 35/16, B01D 35/147

(54) **FILTER MIT EINEM AUSTAUSCHBAREN FILTEREINSATZ**
FILTER WITH A REPLACEABLE FILTER INSERT
FILTRE COMPRENANT UNE CARTOUCHE DE FILTRAGE AMOVIBLE

(30) Priorität: 12.11.2010 DE 102010043836; 04.11.2010 DE 102010043433
(43) Veröffentlichungstag der Anmeldung: 11.09.2013
(60) Teilanmeldung: 17204321.8
(73) Patentinhaber: Hengst SE, 48147 Münster (DE)
(72) Erfinder: ARDES, Wilhelm, 59387 Ascheberg (DE)
(74) Vertreter: Linnemann, Winfried
(86) Internationale Anmeldenummer: PCT/EP2011/069146
(87) Internationale Veröffentlichungsnummer: WO 2012/059474

(56) Entgegenhaltungen:
- EP-B1- 1 235 624
- WO-A1-2010/123344
- US-A1- 2010 044 295

## Beschreibung

Die vorliegende Erfindung betrifft ein Filter für ein fluides Medium, insbesondere Öl-, Wasser-, Kraftstoff- oder Luftfilter einer Brennkraftmaschine, mit einem Filtergehäuse und einem damit lösbar verbindbaren Deckel, mit einem austauschbaren Filtereinsatz, der aus einem hohlzylindrischen Filterstoffkörper und zwei diesen stirnseitig einfassenden Stirnscheiben besteht, von denen die eine Stirnscheibe eine zentrale Durchbrechung aufweist, wobei der Filtereinsatz mit der durchbrochenen Stirnscheibe voran auf ein zentrales, einen Teil des Filtergehäuses bildendes Standrohr aufsteckbar ist, wobei auf dem Standrohr ein Sperrring axial verschiebbar geführt ist, wobei der Sperrring mit einer in zum freien Ende des Standrohrs weisender Ausschubrichtung wirkenden Kraft vorbelastet ist, wobei der Sperrring in einer Ausschubstellung durch eine Riegeleinrichtung gegen ein Einschieben gesperrt ist, wobei von dem Filtereinsatz geführte Entriegelungsmittel vorgesehen sind, die bei einem Aufschieben des Filtereinsatzes auf das Standrohr die Riegeleinrichtung in Entriegelungsrichtung betätigen und ein Einschieben des Sperrrings und des Filtereinsatzes freigeben, und wobei im in das Filtergehäuse eingebauten Zustand des Filtereinsatzes eine an der Stirnscheibe oder an dem Sperrring vorgesehene Dichtung im Zusammenwirken mit einer Dichtfläche des Filtergehäuses eine Rohseite und eine Reinseite des Filters voneinander trennt.

An Filter, insbesondere Öl-, Wasser-, Kraftstoff- oder Luftfilter einer Brennkraftmaschine, werden zunehmend höhere Anforderungen gestellt, insbesondere hinsichtlich der Filterfeinheit und der Standzeit der austauschbaren Filtereinsätze. Diese hohen Anforderungen können nur erfüllt werden, wenn in die Filter geeignete Filtereinsätze hoher Qualität eingebaut werden.

Ein Filter, bei dem der Einbau eines nicht geeigneten Fremd-Filtereinsatzes im Rahmen einer Filterwartung mit einem Filtereinsatzwechsel unterbunden wird, ist aus EP 1 235 624 B1 bekannt. Dieses Dokument beschreibt ein Filter mit den eingangs genannten Merkmalen. Der auf dem Standrohr geführte Sperrring ist zugleich eine Ventilhülse, die axial auf dem Standrohr verschieblich und mit einer in Ventilschließrichtung wirkenden Kraft vorbelastet ist. In der Schließstellung des Ventils verrastet der Sperrring mittels nach radial innen weisender Sperrnasen an Sperrzungen mit dem Standrohr. Durch Aufstecken eines Filtereinsatzes mit passenden Entriegelungsmitteln wird die Verrastung des Sperrrings beziehungsweise der Ventilhülse mit dem Standrohr gelöst, indem die Sperrzungen nach radial außen verschwenkt werden. Der Sperrring wird dann durch den Filtereinsatz in Ventilöffnungsstellung verschoben und dort gehalten. Ein ungeeigneter Fremd-Filtereinsatz löst die Verrastung des Sperrrings am Standrohr nicht und der Filtereinsatz kann nicht vollständig auf das Standrohr aufgesteckt werden. Somit ist aufgrund des in Schließstellung befindlichen Ventilkörpers ein Betrieb des Filters nicht möglich; das gleiche gilt bei fehlendem Filtereinsatz. Der Sperrring ist mittels eines Dichtrings gegen das Standrohr abgedichtet. Die Stirnscheibe des Filtereinsatzes, die mit dem Sperrring zusammenwirkt, ist über einen weiteren Dichtring an der Stirnscheibe gegen den Sperrring abgedichtet.

Dieses bekannte Filter erfüllt zwar die Anforderung, den Einbau eines ungeeigneten Fremd-Filtereinsatzes zu verhindern, jedoch ist dafür ein Filtereinsatz mit einer Stirnscheibe mit relativ aufwändig gestalteten Entriegelungsmitteln nötig und es sind zwei Dichtstellen mit je einem Dichtring vorhanden, was nachteilig einen erhöhten Teile- und Montageaufwand mit sich bringt.

Für die vorliegende Erfindung stellt sich daher die Aufgabe, ein Filter der eingangs genannten Art zu schaffen, welches einen Einsatz von ungeeigneten Filtereinsätzen und einen Betrieb des Filters ohne Filtereinsatz unterbindet und welches dabei eine einfache Konstruktion mit einer geringen Zahl von Einzelteilen und mit einer dennoch hohen Funktionszuverlässigkeit aufweist.

Die Lösung dieser Aufgabe gelingt erfindungsgemäß mit einem Filter der eingangs genannten Art, das dadurch gekennzeichnet ist, dass bei in Ausschubstellung befindlichem Sperrring und in axialer Anlage am Sperrring befindlichem Filtereinsatz die Dichtung von der zugehörigen Dichtfläche des Filtergehäuses entfernt gehalten ist.

Mit der Erfindung wird eine vorteilhaft einfache Konstruktion erreicht, weil in dem Filter nur eine Dichtung zwischen den Filtereinsatz und dem Filtergehäuse benötigt wird; weitere Dichtungen sind nicht erforderlich. Auch mit der nur einzigen Dichtung wird die gewünschte Funktion erzielt, nämlich den Betrieb des Filters mit einem ungeeigneten, die erforderlichen Entriegelungsmittel nicht aufweisenden Fremd-Filtereinsatzes zu verhindern. Dies wird in besonders einfacher Weise dadurch erreicht, dass bei Einsatz eines die nötigen Entriegelungsmittel nicht aufweisenden Filtereinsatzes die zwischen diesem und dem Filtergehäuse vorgesehene Dichtung gar nicht in eine Dichtposition gelangt; vielmehr wird erfindungsgemäß in diesem Fall die Dichtung in einem Abstand von der zugehörigen Dichtsitz gehalten. Zugleich kann der Filtereinsatz nicht in seine Einbaulage gebracht werden, was ein Verschließen des Filtergehäuses mit dem zugehörigen Gehäusedeckel unterbindet. Somit wird mit technisch einfachen Mitteln die gewünschte Funktion mit einer hohen Zuverlässigkeit und mit günstigen Fertigungs- und Montagekosten erreicht.

In weiterer Ausgestaltung ist bevorzugt vorgesehen, dass das Filtergehäuse einen Boden mit einem zentralen hohlzylindrischen Bodenteil hat und dass die filtergehäuseseitige Dichtfläche an einer Innenumfangsfläche oder Außenumfangsfläche oder Stirnfläche des hohlzylindrischen Bodenteils angeordnet ist. Bei dieser Ausführung genügt vorteilhaft eine Dichtung mit einem relativ kleinen Durchmesser, was zu günstigen Fertigungskosten beiträgt. Die Dichtung kann radial dichtend oder axial dichtend ausgeführt sein, wobei eine radial dichtende Dichtung bevorzugt ist, weil mit ihr ein Ausgleich von Maßtoleranzen einfacher ist.

Im Sinne einer kompakten Bauweise wird vorgeschlagen, dass der hohlzylindrische Bodenteil und ein unterer Teil das Standrohrs einen Ringspalt begrenzen, der den Sperrring in dessen eingeschobener Position zumindest über einen Teil seiner Höhe aufnimmt.

Weiter ist bevorzugt vorgesehen, dass die die Durchbrechung aufweisende Stirnscheibe des Filtereinsatzes an ihrer vom Filterstoffkörper abgewandten Seite einen zentralen ringförmigen Fortsatz aufweist, der die Durchbrechung umgibt und der die Dichtung trägt. Dadurch, dass die Dichtung dem Filtereinsatz zugeordnet ist, wird mit jedem Filtereinsatzwechsel bei einer Wartung des Filters die Dichtung erneuert, was zu einer zuverlässigen Funktion beiträgt.

Eine diesbezügliche Weiterbildung schlägt vor, dass im in das Filtergehäuse eingebauten Zustand des Filtereinsatzes der Fortsatz mit der Dichtung in den Ringspalt eingreift. In dieser Ausführung ist eine günstige Anordnung und Unterbringung der Dichtung möglich.

Bei dem erfindungsgemäßen Filter können die Entriegelungsmittel an dem Filtereinsatz oder an einem separaten, vor dem Filtereinsatz auf das Standrohr aufsteckbaren Entriegelungsmittelkörper angeordnet oder angeformt sind. In der ersten Alternative werden besonders wenige Einzelteile benötigt. Bei der zweiten Alternative ist durch den separaten Entriegelungsmittelkörper zwar ein Bauteil mehr vorhanden, jedoch ermöglicht dieses eine größere Freiheit bei der Verbindung von Filtereinsätzen, da diese selbst dann die Entriegelungsmittel nicht aufweisen müssen, sondern lediglich den Entriegelungsmittelkörper beim Einbau des Filtereinsatzes in das Filtergehäuse führen und positionieren.

Bevorzugt ist aber vorgesehen, dass die Entriegelungsmittel an der die Durchbrechung aufweisenden Stirnscheibe des Filtereinsatzes oder an einem einen Teil des Filtereinsatzes bildenden, im Inneren des Filterstoffkörpers zwischen den Stirnscheiben angeordneten Stützkörper angeordnet oder angeformt sind. Dabei werden ohnehin vorhandene Teile des Filtereinsatzes für die Anordnung der Entriegelungsmittel genutzt, was fertigungstechnisch günstig ist. Der Stützkörper kann beispielsweise ein hohlzylindrisches Stützgitter sein.

Die oben erwähnte Riegeleinrichtung des Filters kann unterschiedlich ausgeführt sein. Eine diesbezügliche erste Ausführung sieht vor, dass die Riegeleinrichtung durch mit dem Standrohr einstückig ausgeführte oder fest verbundene, in Radialrichtung bewegliche Sperrzungen mit je einer in Axialrichtung weisenden Sperrfläche gebildet ist, dass die Sperrzungen mit einer in Verriegelungsrichtung wirkenden Kraft vorbelastet sind und jeweils mit ihrer Sperrfläche den Sperrring in seiner Ausschubstellung gegen axiales Einschieben relativ zum Standrohr sperren und dass durch die Entriegelungsmittel die Sperrzungen beim Aufstecken des Filtereinsatzes auf das Standrohr unmittelbar in radialer Richtung in ihre Entriegelungsstellung bewegbar sind. Dadurch, dass die die Riegeleinrichtung bildenden Sperrzungen mit dem Sperrring einstückig ausgeführt oder fest verbunden sind, bilden diese Teile eine Einheit, die insgesamt mit dem Standrohr verbunden werden kann. Ein Entriegeln des Sperrrings kann in gewünschter Weise hier nur erfolgen, wenn beim Einbau des Filtereinsatzes die zum Entriegeln der Sperrzungen erforderlichen Entriegelungsmittel in der passenden Ausführung und Anordnung in entsperrenden Eingriff mit den Sperrzungen gebracht werden. Aufgrund des unmittelbaren Einwirkens der Entriegelungsmittel auf die Sperrzungen wird eine besonders zuverlässige Funktion erreicht.

Bevorzugt verlaufen dabei die Sperrzungen in axialer Richtung. Die Sperrzungen können so problemlos mit einer ausreichend großen Länge ausgeführt werden, die die nötige radiale Beweglichkeit ohne besondere Gelenke ermöglicht. Dazu bestehen zumindest die Sperrzungen aus einem flexiblen Material.

Weiter ist bevorzugt vorgesehen, dass die Sperrzungen aus einem federnden Material bestehen. In dieser Ausführung kann die Kraft, die die Sperrzungen in Verriegelungsrichtung vorbelastet, einfach durch das Material selbst erzeugt werden, was separate Federn oder dergleichen Teile entbehrlich macht.

Eine weitere Ausgestaltung schlägt vor, dass der Sperrring hohlzylindrisch ist und außen auf das Standrohr aufgesetzt ist und dass die Sperrzungen am Standrohr vorgesehen sind und jeweils eine radial nach außen gerichtete Sperrnase aufweisen, wobei die Sperrnasen mit einer Stirnseite des Sperrrings in und außer Eingriff bringbar sind. In dieser Ausführung wird eine einfache und gute Führung des Sperrrings auf dem Standrohr erreicht. Gleichzeitig werden die Sperrzungen durch den Sperrring gegen schädigende äußere Einwirkungen geschützt, was einer dauerhaft zuverlässigen Funktion zugute kommt.

Im Sinne einer einfachen Konstruktion mit hoher funktionaler Zuverlässigkeit ist bevorzugt vorgesehen, dass die Sperrzungen jeweils einen radial in Verriegelungsrichtung vorragenden Nocken aufweisen und dass beim Aufstecken des Filtereinsatzes auf das Standrohr die Entriegelungsmittel mit den Nocken in Eingriff treten und die Sperrzungen radial in Entriegelungsrichtung verschwenken.

Um zu verhindern, dass zufällig oder durch bewusste Manipulation die Sperrzungen in Verriegelungsrichtung verbogen oder sogar abgebrochen werden, wird vorgeschlagen, dass jeder Sperrzunge ein deren Bewegung in Verriegelungsrichtung begrenzender Anschlag zugeordnet ist.

Um auch hinsichtlich der Entriegelungsmittel eine möglichst einfache und zuverlässige Konstruktion zu erzielen, sind bevorzugt die Entriegelungsmittel durch radial in Entriegelungsrichtung der Sperrzungen vorragende Rippen gebildet. Diese Rippen sorgen beim Einsetzen des Filtereinsatzes in das Filtergehäuse für ein Verschwenken der Sperrzungen, um ein Einschieben des Sperrrings auf dem Standrohr freizugeben und so den Filtereinsatz vollständig in das Filtergehäuse einführen und die Dichtung und die zugehörige Dichtfläche in Eingriff miteinander bringen zu können.

Eine hinsichtlich der Riegeleinrichtung alternative Ausgestaltung des erfindungsgemäßen Filters schlägt vor, dass die Riegeleinrichtung durch am Außenumfang des Standrohrs und am Innenumfang des Sperrrings angeordnete Führungsmittel gebildet ist, die zusammen eine Sperrstufe und eine dazu in Umfangsrichtung versetzte anschließende axiale oder schräge Führung bilden, dass die Führungsmittel mittels der Sperrstufe den Sperrring in seiner Ausschubstellung gegen axiales Einschieben relativ zum Standrohr sperren und dass beim Aufstecken des Filtereinsatzes auf das Standrohr der Sperrring durch die Entriegelungsmittel in Umfangsrichtung in eine Entriegelungsstellung verdrehbar und dann entlang der axialen oder schrägen Führung einschiebbar ist. Auch bei dieser Ausführung der Riegeleinrichtung sind deren Elemente integral mit dem Standrohr und dem Sperrring ausgebildet, so dass separate Einzelteile dafür auch hier nicht erforderlich sind. Ein Entriegeln des Sperrrings kann auch hier in gewünschter Weise nur erfolgen, wenn beim Einbau des Filtereinsatzes die zum Entriegeln der Riegeleinrichtung erforderlichen Entriegelungsmittel in der passenden Ausführung und Anordnung vorhanden sind.

In konkreter Weiterbildung ist bevorzugt vorgesehen, dass am Innenumfang des Filtereinsatzes und am Außenumfang des Sperrrings je eine oder mehrere zusammenwirkende schiefe Ebenen derart angeordnet sind, das bei einem axialen Verschieben des Filtereinsatzes der Sperrring in eine begrenzte Rotation versetzt wird. Die hier vorgesehenen, zusammenwirkenden schiefen Ebenen sind ein einfaches und zuverlässiges Mittel zum Erzeugen der gewünschten begrenzten Drehbewegung des Sperrrings zum Zweck der Entriegelung.

Um eine konstruktiv günstige Anordnung zu erzielen, sind bevorzugt die filtereinsatzseitigen schiefen Ebenen am Innenumfang der zentralen Durchbrechung der Stirnscheibe angeordnet.

Um auch hinsichtlich der zusammenwirkenden Führungsmittel am Standrohr und am Sperrring eine einfache und gleichzeitig funktional günstige Anordnung zu erzielen, wird vorgeschlagen, dass die am Außenumfang des Standrohrs angeordneten Führungsmittel durch wenigstens einen eine Führungskontur bildenden vorstehenden Steg gebildet sind und dass die am Innenumfang des Sperrrings angeordneten Führungsmittel durch wenigstens eine in die Führungskontur hineinragende Führungsnase gebildet sind. Die Führungsnase kann sich so innerhalb der Führungskontur bewegen, aber nicht über die durch den vorstehenden Steg gebildete Führungskontur hinwegbewegt werden. Sowohl die durch den vorstehenden Steg gebildete Führungskontur als auch die Führungsnase können vorteilhaft einstückig mit dem jeweils zugeordneten Bauteil ausgeführt werden

Um zu gewährleisten, dass der Sperrring beim Entnehmen des Filtereinsatzes aus dem Filtergehäuse zuverlässig seine Sperrstellung einnimmt, wird vorgeschlagen, dass die am Außenumfang des Standrohrs angeordneten Führungsmittel eine den Sperrring bei seiner Ausschubbewegung in seine Sperrposition zwangsführende Führungsschräge aufweisen.

Für alle vorstehend beschriebenen Ausführungen des Filters sind bevorzugt am Außenumfang des Standrohrs mit den Entriegelungsmitteln oder mit am Innenumfang des Filtereinsatzes zusätzlich angeordneten Führungsmitteln zusammenwirkende Positionierführungsmittel vorgesehen, die beim Aufstecken des Filtereinsatzes die Entriegelungsmittel in Umfangsrichtung in eine für die Sperrzungen des Standrohrs oder für die schiefen Ebenen des Sperrrings eingriffsgerechte Stellung zwangsführen und dann den Filtereinsatz gegen Verdrehen in Umfangsrichtung sperren. Hiermit wird auch ohne besondere Aufmerksamkeit einer Bedienungsperson und ohne die Notwendigkeit einer exakten manuellen Positionierung von Filtereinsatz und Sperrring relativ zueinander die richtige Einbauposition der genannten Teile zueinander bewirkt. Auch muss somit bei der Ausführung des Filters mit durch eine begrenzte Verdrehung des Sperrrings auszuführender Entriegelung die Bedienungsperson nicht darauf achten, dass der Filtereinsatz bei seinem Einführen in das Filtergehäuse nicht selbst eine Drehung in Umfangsrichtung ausführt.

Ein weiterer Beitrag zu einer kostengünstigen Fertigung des Filters besteht darin, dass bevorzugt die den Sperrring in Ausschubrichtung vorbelastende Kraft durch wenigstens eine Druckfeder erzeugt ist, die außen auf dem Standrohr angeordnet ist und die einerseits an dem Standrohr oder dem Filtergehäuse und andererseits an dem Sperrring abgestützt ist. Im einfachsten Fall kann die Druckfeder eine das Standrohr umgebende Schraubenfeder sein.

Mit der Erfindung wird auch die Möglichkeit geschaffen, zur Bildung eines codierten Schloss-Schlüssel-Systems unterschiedlich ausgeführte Riegeleinrichtungen und unterschiedlich ausgeführte Entriegelungsmittel vorzusehen, wobei eine bestimmte Ausführung der Riegeleinrichtung nur mittels einer bestimmten, passenden Ausführung der Entriegelungsmittel entriegelbar ist. Dies kann dazu beitragen, den Einbau ungeeigneter Filtereinsätze in das Filtergehäuse zu verhindern.

Bei vielen Filtern ist ein Filterumgehungsventil vorgesehen, welches eine Flüssigkeitsströmung unmittelbar von der Rohseite zur Reinseite des Filters unter Umgehung des Filterstoffkörpers erlaubt, wenn der Filterstoffkörper durch Schmutzpartikel verstopft ist. Eine besonders günstige Integration eines solchen Filterumgehungsventils in das erfindungsgemäße Filter wird erreicht, wenn, wie in einer erfindungsgemäßen Weiterbildung vorgeschlagen wird, zur Bildung eines Filterumgehungsventils eine Stirnscheibe des Filtereinsatzes einen Ventilsitz für einen filtergehäuseseitigen, mit einer in Ventilschließrichtung wirkenden Kraft vorbelasteten Ventilkörper aufweist. Vorteilhaft wird hierbei zur Realisierung des Filterumgehungsventils kein zusätzliches Ventilsitzbauteil benötigt, weil der Ventilsitz an der Stirnscheibe des Filtereinsatzes vorgesehen ist.

Bei Filtern ist es in vielen Fällen wünschenswert, im Rahmen einer Filterwartung eine Entleerung des Filtergehäuses zu ermöglichen, bevor der Filtereinsatz aus dem Filtergehäuse entnommen wird. Zu diesem Zweck ist bei dem erfindungsgemäßen Filtereinsatz vorgesehen, dass das Filtergehäuse in seinem Boden einen exzentrisch angeordneten Entleerungskanal aufweist, dass der Filtereinsatz an der vom Filterstoffkörper abgewandten Seite der dem Boden zugewandten Stirnscheibe einen axial vorstehenden, exzentrischen Verschlussdorn für den Entleerungskanal aufweist und dass am Innenumfang des Filtereinsatzes und am Außenumfang des Standrohrs zusammenwirkende Positionierführungsmittel vorgesehen sind, die beim Aufstecken des Filtereinsatzes auf das Standrohr den Filtereinsatz in Umfangsrichtung in eine für den Entleerungskanal eingriffsgerechte Stellung des Verschlussdorns zwangsführen. In dieser Ausführung des Filters wird zum einen beim Einsetzen des Filtereinsatzes der im Boden des Filtergehäuses angeordnete Entleerungskanal zuverlässig verschlossen, weil gewährleistet ist, dass der Verschlussdorn passend zum Entleerungskanal positioniert wird. Dabei können die hier erwähnten Positionierführungsmittel für den Verschlussdorn separate Mittel sein oder auch, was bevorzugt ist, zugleich durch die für die eingriffsgerechte Positionierung der Entriegelungsmittel relativ zu der Riegeleinrichtung schon vorgesehenen Positionierführungsmittel gebildet sein. Wenn der Deckel des Filtergehäuses im Rahmen einer Wartung abgenommen und der Filtereinsatz um einen für das Entfernen des Verschlussdorns aus dem Entleerungskanal ausreichenden Weg bewegt wird, läuft die im Filtergehäuse und im Filtereinsatz befindliche Flüssigkeit durch den Entleerungskanal ab. Somit kann ein weitestgehend von Flüssigkeit freier Filtereinsatz aus dem Filtergehäuse entnommen werden. Dabei kann, wie an sich bekannt, der Filtereinsatz mit dem Deckel verrastet sein, um beim Abnehmen des Deckels vom Filtergehäuse eine axiale Zugkraft auf den Filtereinsatz zu übertragen, die den Filtereinsatz zusammen mit dem Deckel in Entnahmerichtung bewegt.

Das vorstehend beschriebene Filter kann sowohl ein stehendes Filter, bei dem der Filtereinsatz nach oben hin entnehmbar ist, als auch ein hängendes Filter, bei dem der Filtereinsatz nach unten hin entnehmbar ist, sein.

Zusätzlich zu dem vorstehend beschriebenen Sperrring sowie der zugehörigen Riegeleinrichtung und den zugehörigen Entriegelungsmitteln kann das erfindungsgemäße Filter zur Erhöhung der Sicherheit gegen die Verwendung von ungeeigneten Fremd-Filtereinsätzen auch noch eine weitere Riegeleinrichtung aufweisen, wobei die weitere Riegeleinrichtung ein auf dem Standrohr verschiebbar geführtes Endstück und einen Teil des Standrohrs oder des Endstücks bildende, in Radialrichtung bewegliche Sperrzungen mit je einer in Axialrichtung weisenden Sperrfläche aufweist, wobei die Sperrzungen durch eine in Verriegelungsrichtung wirkende Kraft vorbelastet sind und jeweils mit ihrer Sperrfläche das Endstück in seiner Ausschubstellung gegen axiales Einschieben relativ zum Standrohr sperren und wobei durch die Entriegelungsmittel die Sperrzungen unmittelbar in radialer Richtung in ihre Entriegelungsstellung bewegbar sind. Auf diese Weise wird eine doppelte Sicherung erzielt, wenn besonders hohe Ansprüche hinsichtlich der Sicherung gegen den Einbau ungeeigneter Filtereinsätze in das Filtergehäuse gestellt werden.

Im Folgenden werden Ausführungsbeispiele der Erfindung anhand einer Zeichnung erläutert. Die Figuren der Zeichnung zeigen:
- Figur 1: ein Filter in einer ersten Ausführung mit einem geöffneten Filtergehäuse und ohne Filtereinsatz, im Längsschnitt,
- Figur 2: das Filter aus Figur 1 mit einem teilweise eingesetzten Filtereinsatz und mit einem Deckel, im Längsschnitt,
- Figur 3: das Filter aus Figur 1 und 2 mit dem weiter eingeführten Filtereinsatz, im Längsschnitt,
- Figur 4: das Filter aus Figur 1 bis 3 mit vollständig eingeführtem Filtereinsatz und angebrachtem Deckel, im Längsschnitt,
- Figur 5: ein Standrohr des Filters gemäß Figur 1 bis 4 als Einzelteil, in Ansicht,
- Figur 6: einen Sperrring des Filters gemäß Figur 1 bis 4 als Einzelteil, in Ansicht,
- Figur 7: einen Filtereinsatz des Filters gemäß Figur 1 bis 4 als Einzelteil, in Ansicht,
- Figur 8: ein Filter in einer zweiten Ausführung in einem Längsschnitt durch den unteren Bereich des Filters, ohne Filtereinsatz,
- Figur 9: das Filter aus Figur 8 mit einem eingebauten Filtereinsatz, in einem ersten Längsschnitt,
- Figur 10: das Filter aus Figur 9 in einem zweiten Längsschnitt,
- Figur 11: das Filter aus Figur 8 bis 10 mit einem nicht passenden Fremd-Filtereinsatz, im Längsschnitt,
- Figur 12: den unteren Teil eines Standrohrs des Filters aus Figur 8 bis 11, als Einzelteil in Ansicht,
- Figur 13: einen mit dem Standrohr aus Figur 12 verschiebbar verbindbaren Sperrring, als Einzelteil in Ansicht,
- Figur 14: den unteren Teil eines Filtereinsatzes mit integrierten Entriegelungsmitteln, in Ansicht,
- Figur 15: das Filter in einer dritten Ausführung in einem Längsschnitt durch den unteren Bereich des Filters, mit einem teilweise eingeführten Filtereinsatz, im Längsschnitt,
- Figur 16: das Filter aus Figur 15 mit weiter eingeführtem Filtereinsatz, im Längsschnitt,
- Figur 17: das Filter aus Figur 15 und 16 mit noch weiter eingeführtem Filtereinsatz, im Längsschnitt,
- Figur 18: das Filter aus Figur 15 bis 17 mit nochmals weiter eingeführtem Filtereinsatz, im Längsschnitt,
- Figur 19: das Filter aus Figur 15 bis 18 mit nochmals weiter eingeführtem Filtereinsatz, im Längsschnitt,
- Figur 20: das Filter aus Figur 15 bis 19 mit vollständig eingeführtem Filtereinsatz, in einem ersten Längsschnitt,
- Figur 21: das Filter aus Figur 20 in einem zweiten Längsschnitt,
- Figur 22: das Filter aus Figur 20 und 21 in einem dritten Längsschnitt,
- Figur 23: das Filter aus Figur 15 bis 22 mit einem nicht passenden Fremd-Filtereinsatz, im Längsschnitt, und
- Figur 24: einen zu dem Filter gemäß Figur 15 bis 22 passenden Filtereinsatz, in Ansicht schräg von unten.

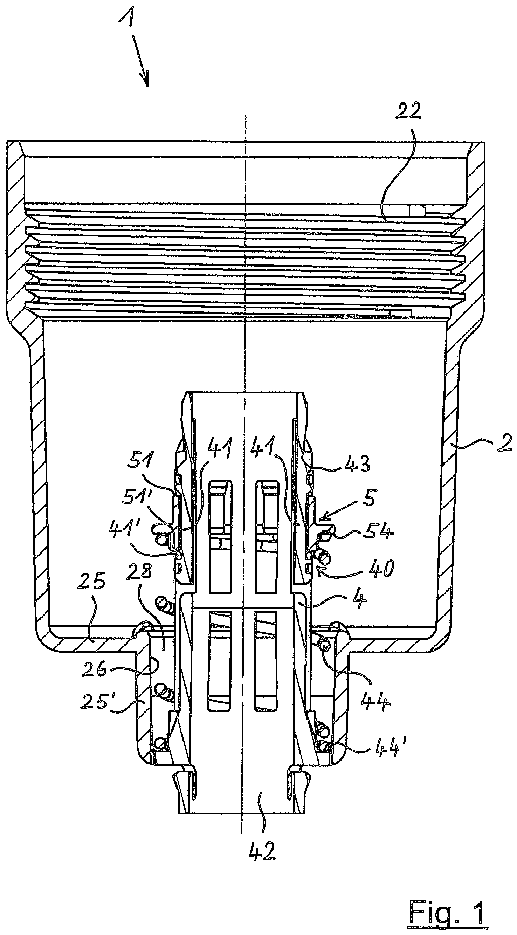

Figur 1 zeigt ein Filter 1 in einer ersten Ausführung, mit einem geöffneten Filtergehäuse 2 und ohne Filtereinsatz, im Längsschnitt. Das Filtergehäuse 2 ist becherförmig mit einem Boden 25, in dessen Zentrum ein sich nach unten fortsetzender, hohlzylindrische Bodenteil 25' liegt. Der Innenumfang dieses Bodenteils 25' bildet eine Dichtfläche 26 für eine Dichtung 36 eines hier noch nicht eingebauten Filtereinsatzes 3. An seinem oberen Ende besitzt das Gehäuse 2 ein Gewinde 22 zur Verschraubung mit einem hier abgenommenen Deckel 21. Zentral im Inneren des Filtergehäuses 2 ist ein Standrohr 4 angeordnet, dass mit seinem unteren Ende mit dem Filtergehäuse 2 verbunden ist und sich von dort nach oben bis etwa zur halben Höhe des Filtergehäuses 2 erstreckt.

Auf dem Standrohr 4 ist ein Sperrring 5 in Axialrichtung begrenzt verschieblich geführt. In seiner nach oben weisenden Ausschubrichtung ist der Sperrring 5 durch die Kraft einer Feder 44 vorbelastet, die mit ihrem unteren Ende an einer Federabstützung 44' im hohlzylindrischen Bodenteil 24' und mit ihrem oberen Ende an einer Federabstützung 54 am Sperrring 5 abgestützt ist. Somit liegt in Figur 1 der Sperrring 5 durch die Wirkung der Feder 44 in seiner Ausschubstellung. In dieser Ausschubstellung liegt eine Oberkante 51 des Sperrrings 5 an einem am Standrohr 4 ausgebildeten Anschlag, hier in Form von Nocken 43, an.

Das Standrohr 4 weist eine Riegeleinrichtung 40 auf, mit welcher der Sperrring 5 in seiner Ausschubstellung sperrbar ist. Die Riegeleinrichtung 40 umfasst hier zwei federnde Sperrzungen 41, die in Axialrichtung verlaufen und einstückig mit dem Standrohr 4 ausgebildet sind. Jeweils nahe dem unteren Ende jeder Sperrzunge 41 weist diese jeweils an ihrer Außenseite eine in Axialrichtung nach oben weisenden Sperrfläche 41' auf, die unmittelbar unterhalb einer Unterkante 51' des Sperrrings 5 liegt. Somit ist der Sperrring 5 an einem Einschieben nach unten gehindert.

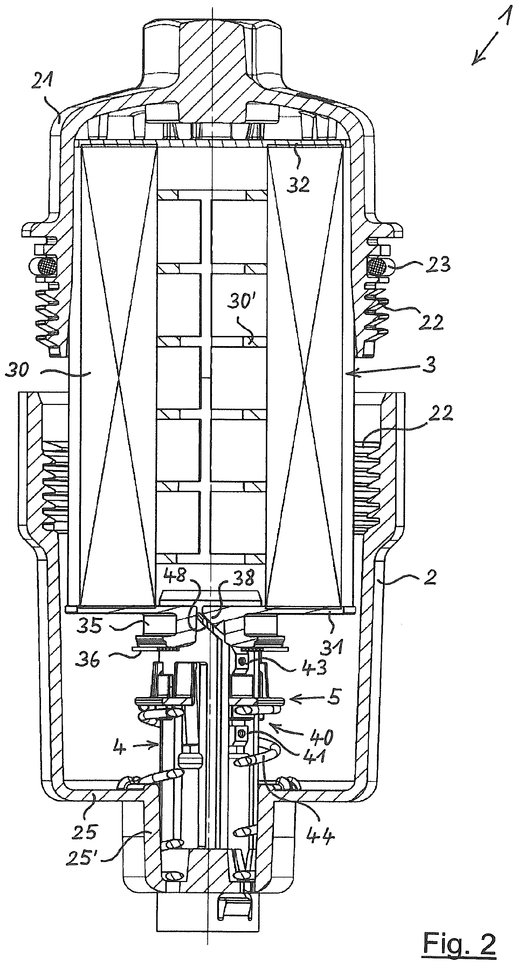

Figur 2 zeigt das Filter 1 aus Figur 1 mit einem teilweise eingesetzten Filtereinsatz 3 und mit einem Deckel 21 im Längsschnitt. Der Filtereinsatz 3 besteht aus einem hohlzylindrischen Filterstoffkörper 30, zum Beispiel aus einem zickzackförmig gefalteten Filterpapier, der stirnseitig von einer unteren Stirnscheibe 31 und einer oberen Stirnscheibe 32 eingefasst ist. In Inneren des Filterstoffkörpers 30 ist zu dessen Unterstützung gegen ein Kollabieren im Betrieb ein hohlzylindrisches Stützgitter 30' angeordnet. Die untere Stirnscheibe 31 ist in ihrem Zentrum durchbrochen ausgeführt und auf das Standrohr 4 aufgesteckt. Unterseitig erstreckt sich von der unteren Stirnscheibe 31 ein ringförmiger Fortsatz 35 nach unten, an dessen unterem Ende eine Dichtung 36, hier ein Radialdichtring, angebracht ist. Um den Filtereinsatz 3 einbauen zu können, besitzt dieser hier nicht sichtbaren Entriegelungsmittel, mit denen die Riegeleinrichtung 40 entriegelt werden kann. Um die Entriegelungsmittel in eine eingriffsgerechte Position für die Sperrzungen 41 zu bringen, sind am Au-βenumfang des Standrohrs 4 und am Innenumfang der unteren Stirnscheibe 31 zusammenwirkende Positionierführungsmittel 48 und 38 angeordnet. Diese führen den Filtereinsatz 3 in Umfangsrichtung in eine Position, in der die Entriegelungsmittel passend zum den Sperrzungen 41 liegen. Die Entriegelungsmittel wirken dann mit den Nocken 43 an den Sperrzungen 41 zusammen, um die Sperrzungen 41 in Radialrichtung nach innen zu verschwenken und so die Riegeleinrichtung 40 zu entriegeln.

Oben in Figur 2 ist nun auch der Deckel 21 des Filtergehäuses 2 erkennbar, der an seinem unteren Rand ebenfalls ein Gewinde 22 zur Verschraubung mit dem Filtergehäuse 2 aufweist. Mittels einer Dichtung 23 werden dann das Filtergehäuse 2 und der Deckel 21 gegeneinander flüssigkeitsdicht abgedichtet.

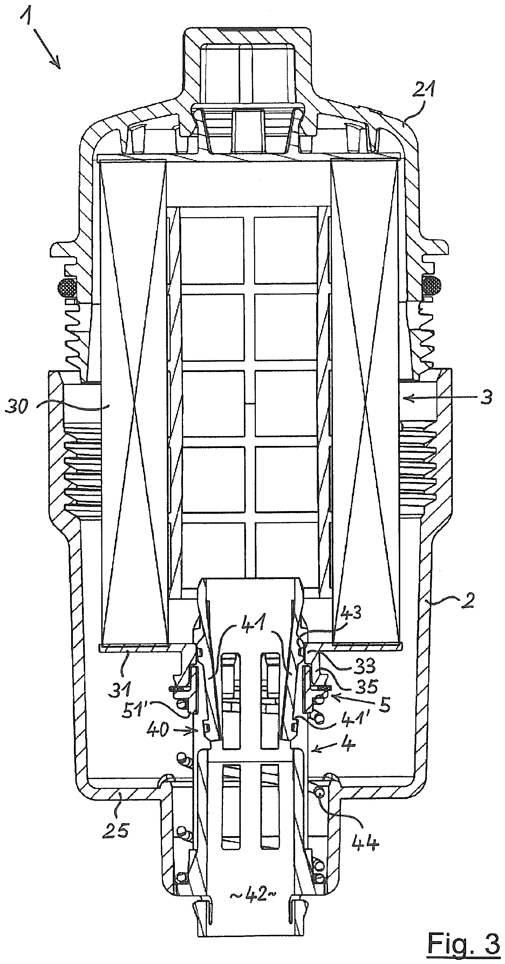

Figur 3 zeigt das Filter 1 aus Figur 1 und 2 mit dem weiter eingeführten Filtereinsatz 3, wieder im Längsschnitt. Radial innen an der unteren Stirnscheibe 31 des Filtereinsatzes 3 sind nun die hier rippenförmigen Entriegelungsmittel 33 erkennbar, die in dem Zustand gemäß Figur 3 gerade entriegelnd mit den Nocken 43 der Sperrzungen 41 zusammenwirken. Die Sperrzungen 41 befindet sich nun in ihrer nach radial innen verschwenken Lösestellung, in der die Sperrflächen 41' radial innen von der Unterkante 51' des Sperrrings 5 liegen. Somit ist eine Verschiebung des Sperrrings 5 nach unten gegen die Kraft der Feder 44 freigegeben.

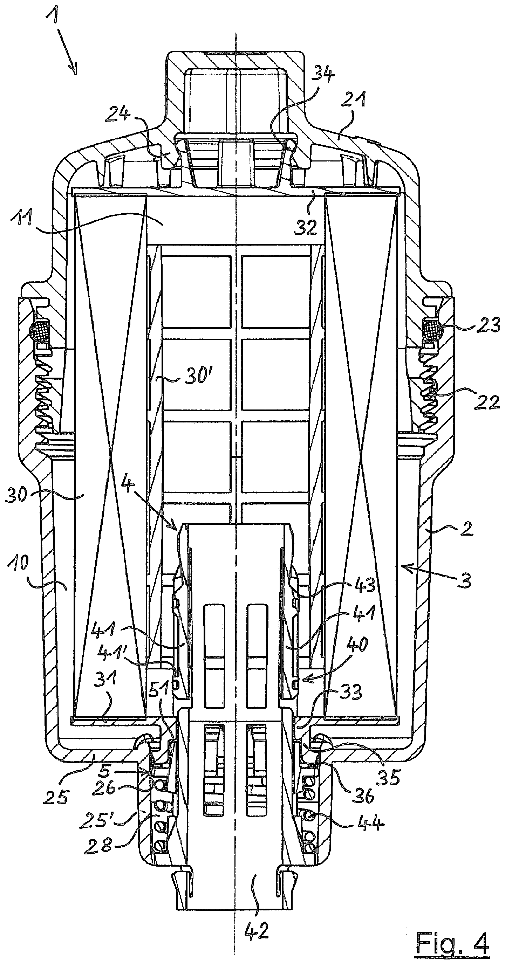

Figur 4 zeigt das Filter 1 aus Figur 1 bis 3 mit vollständig eingeführtem Filtereinsatz 3 und angebrachtem Deckel 21, wieder im Längsschnitt. Die Entriegelungsmittel 33 sind nun über die Sperrzungen 41 hinweg nach unten verschoben, wodurch die federnden Sperrzungen 41 in ihre Ausgangslage zurückgekehrt sind. Die untere Stirnscheibe 31 des Filtereinsatzes 3 liegt nun in einem geringen Abstand über dem Boden 25 des Filtergehäuses 2. Der hohlzylindrische Bodenteil 25' und der untere Teil des Standrohrs 4 bilden einen Ringspalt 28, in den hinein nun der Sperrring 5 verschoben ist und der unterhalb des Sperrrings 5 auch die Feder 44 aufnimmt. Weiterhin ragt der ringförmige Fortsatz 35, der von der Unterseite der unteren Stirnscheibe 31 ausgeht und der die Dichtung 46 trägt, oberhalb des Sperrrings 5 in den Ringspalt 28 hinein, wodurch die Dichtung 36 nun in dichtender Anlage an der Dichtfläche 26 liegt. Auf diese Weise wird eine Rohseite 10 des Filters 1 von einer Reinseite 11 flüssigkeitsdicht getrennt und das Filter ist betriebsbereit. Im Betrieb strömt eine zu filternder Flüssigkeit über einen nicht dargestellten Einlass auf die Rohseite 10 des Filters 1, durchströmt den Filterstoffkörper 30 in Radialrichtung von außen nach innen und verlässt dann das Filter 1 durch einen im hohlen Inneren des Standrohrs 4 ausgebildeten Flüssigkeitsablaufkanal 42. Das Stützgitter 30' schützt dabei den Filterstoffkörper 30 gegen ein Kollabieren in Radialrichtung nach innen.

Ganz oben in Figur 4 ist erkennbar, dass der Filtereinsatz 3 an der Oberseite seiner oberen Stirnscheibe 32 nach oben vorragende Rastzungen 34 aufweist, die mit passend angeordneten Rastzungen 24 an der Unterseite des Deckels 21 in Rasteingriff stehen. Über diesen Rasteingriff kann eine axiale Zugkraft von dem Deckel 21 auf den Filtereinsatz 3 ausgeübt werden, wenn der Deckel 21 vom Filtergehäuse 2 abgeschraubt wird. Dadurch nimmt der Deckel 21 den Filtereinsatz 3 mit.

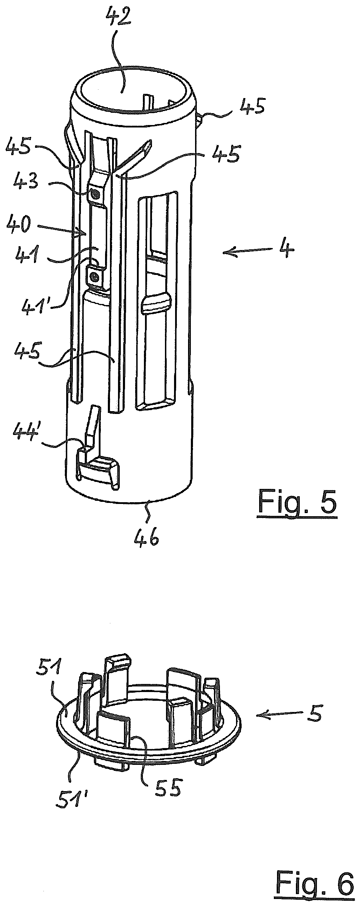

Figur 5 der Zeichnung zeigt ein Standrohr 4 des Filters 1 gemäß Figur 1 bis 4 als Einzelteil in Ansicht. Das Standrohr 4 hat eine hohlzylindrische Grundform. Mit seinem unteren Ende 46 ist das Standrohr 4 mit dem Filtergehäuse 2 verbindbar, beispielsweise verschraubbar oder verrastbar. In seinem oberen Teil besitzt das Standrohr 4 einander gegenüberliegend die zwei Sperrzungen 41 mit ihrer jeweiligen Sperrfläche 41' zur Bildung der Riegeleinrichtung 40.

Auf dem Außenumfang des Standrohrs 4 sind weiterhin Führungskonturen 45 angeformt, die dazu dienen, die am Filtereinsatz 3 vorgesehenen Entriegelungsmittel 33 in eine für die Sperrzungen 41 und deren Nocken 43 eingriffsgerechte Verdrehstellung zu bringen. Zugleich dienen die Führungskonturen 45 in ihrem unteren Teil zur Verdrehsicherung des Sperrrings 5. Durch das Innere des Standrohrs 4 verläuft der Flüssigkeitsablaufkanal 42. Ganz unten am Standrohr 4 ist schließlich noch eine Federabstützung 44' für die Feder 44 sichtbar.

Figur 6 zeigt den Sperrring 5 des Filters 1 gemäß Figur 1 bis 4 als Einzelteil in Ansicht. Der Sperrring 5 besitzt eine umlaufende Oberkante 51 und eine umlaufende Unterkante 51' sowie radial innen mehrere Führungsnasen 55, die mit der zuvor erwähnten Führungskontur 45 am Standrohr 4 zusammenwirken, wenn der Sperrring 5 auf das Standrohr 4 aufgesetzt ist.

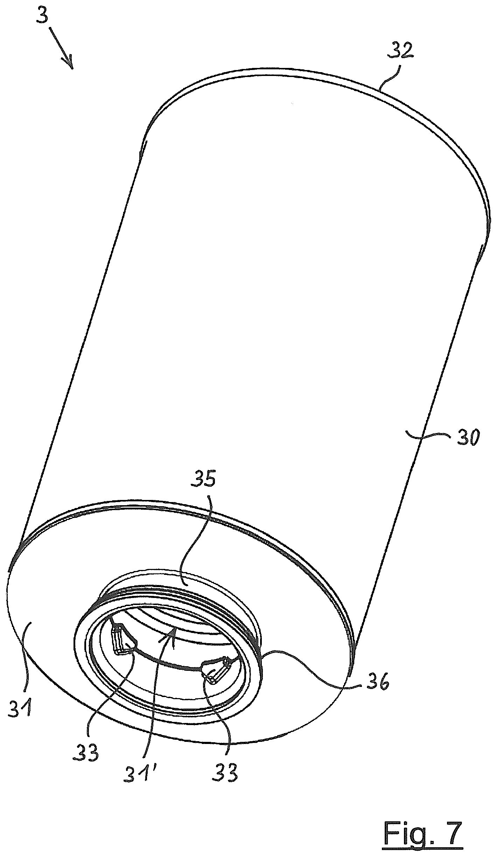

Figur 7 zeigt einen Filtereinsatz 3 des Filters 1 gemäß Figur 1 bis 4 als Einzelteil in Ansicht. Unten und oben sind die beiden Stirnscheiben 31 und 32 sichtbar, zwischen denen der Filterstoffkörper 30 angeordnet ist. Die untere Stirnscheibe 31 besitzt zentral die Durchbrechung 31', mit der sie auf das Standrohr 4 aufgesteckt werden kann. Von der unteren Stirnscheibe 31 erstreckt sich der die Durchbrechung 31' umgebende ringförmiger Fortsatz 35 nach unten, der an seinem unteren Ende die nach radial außen weisende Dichtung 36 trägt. Am Innenumfang des ringförmigen Fortsatzes 35 sind die Entriegelungsmittel 33 sichtbar, die zum Lösen der Riegeleinrichtung 40, konkret zum Verschwenken der Sperrzungen 41 in Löserichtung radial nach innen, dienen, wenn der Filtereinsatz 3 auf das Standrohr 4 aufgesteckt wird.

Bei dem vorstehend beschriebenen Ausführungsbeispiel umfasst die Riegeleinrichtung 40 mehrere federnde Sperrzungen 41. Nachfolgend werden Ausführungsbeispiele beschrieben, bei denen die Riegeleinrichtung 40 anders ausgeführt ist.

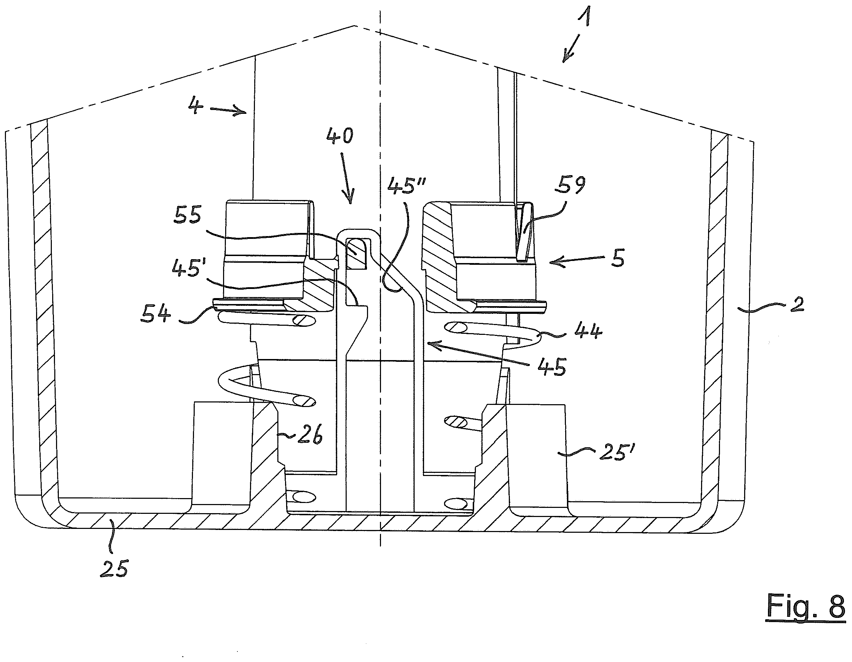

Figur 8 zeigt ein Filter 1 in einer zweiten Ausführung in einem Längsschnitt durch den unteren Bereich des Filters 1, hier noch ohne Filtereinsatz. Außen ist ein Teil des Filtergehäuses 2 mit dem Boden 25 erkennbar. Im Zentrum des Bodens 25 liegt der hohlzylindrische Bodenteil 25', dessen Innenumfang die Dichtfläche 26 bildet.

Im Zentrum des Gehäuses 2 ist das Standrohr 4 angeordnet. Auf dem Standrohr 4 ist der Sperrring 5 in Axialrichtung verschieblich angeordnet. Zusätzlich ist hier der Sperrring 5 relativ zum Standrohr 4 auch in Umfangsrichtung begrenzt verdrehbar. Auch hier ist der Sperrring 5 mit einer in dessen Ausschubrichtung, das heißt gemäß Figur 8 nach oben, wirkenden Kraft vorbelastet, die auch hier durch eine Schraubenfeder 44 erzeugt wird. Da in Figur 8 noch kein Filtereinsatz in das Gehäuse 2 eingesetzt ist, sorgt die Feder 44 dafür, dass der Sperrring 5 seine Ausschubstellung einnimmt. Außerdem ist in dieser Ausschubstellung des Sperrrings 5 dieser gegen ein Einschieben in Axialrichtung, das heißt gemäß Figur 8 nach unten, gesperrt. Dies wird erreicht durch eine einen Teil der Riegeleinrichtung 40 bildende Führungskontur 45 am Außenumfang des Standrohrs 4. Die Führungskontur 45 weist eine nach oben gerichtete Sperrstufe 45' auf, die im Zustand gemäß Figur 8 in Axialrichtung genau unterhalb einer Führungsnase 55 am Innenumfang des Sperrrings 5 liegt. Wenn eine von oben nach unten nur in Axialrichtung wirkende Kraft auf den Sperrring 5 ausgeübt wird, gelangt dessen Führungsnase 55 auf die Sperrstufe 45', wodurch ein weiteres axiales Verschieben unterbunden ist.

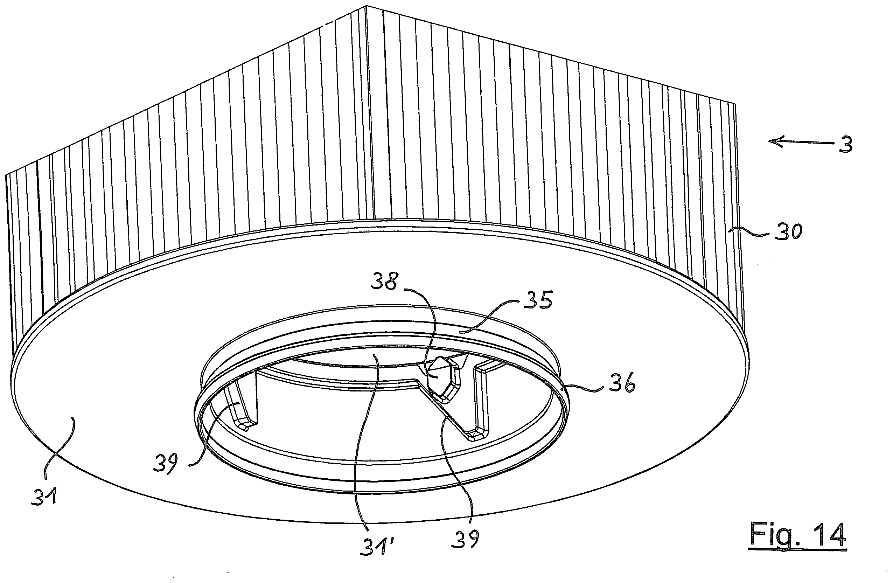

Zum Lösen der Riegeleinrichtung 40 muss der Sperrring 5 zusätzlich zu seiner axialen Bewegung nach unten auch eine Drehbewegung ausführen, damit die Führungsnase 55 an der Sperrstufe 45' vorbei bewegt werden kann. Hierzu sind am Außenumfang des Sperrrings 5 mehrere schiefe Ebenen 59 angeformt, von denen in Figur 8 eine sichtbar ist. Die schiefen Ebenen 59 wirken mit schiefen Ebenen 39 an Filtereinsatz 3 zusammen (vergleiche Figur 14), wenn der Filtereinsatz 3 auf das Standrohr 4 aufgesetzt wird, und sorgen dafür, dass die axiale Bewegung des Filtereinsatzes 3 eine begrenzte Drehbewegung des Sperrrings 5 in Entriegelungsrichtung erzeugt. Die Führungsnase 55 gelangt so innerhalb der Führungskontur 45 in eine Position, in der sie in Umfangsrichtung gegen die Sperrstufe 45' versetzt ist, wonach dann eine weitere Bewegung des Sperrrings 5 in Axialrichtung nach unten frei ist.

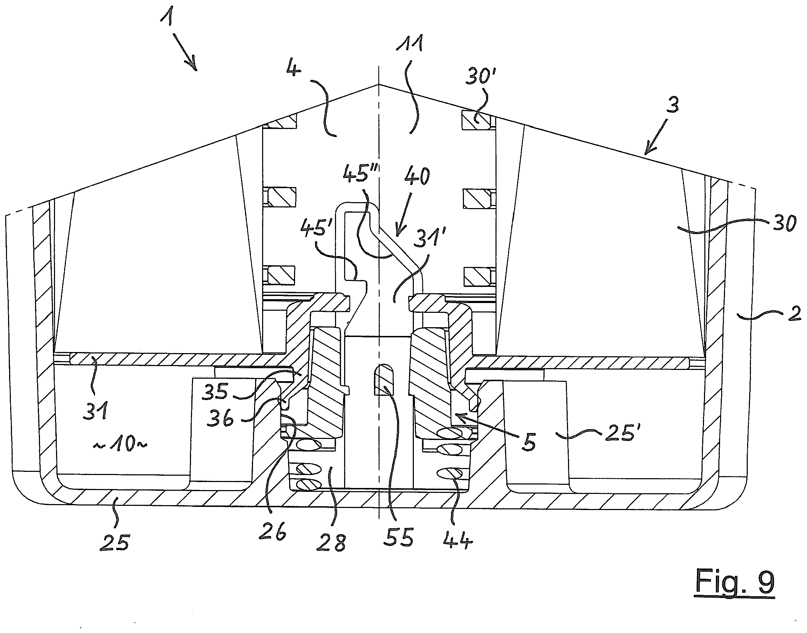

Figur 9 zeigt das Filter 1 aus Figur 8 mit einem vollständig eingebauten Filtereinsatz 3 in einem ersten Längsschnitt, der vor der Mittelachse des Filtergehäuses 2 liegt. Der Sperrring 5 ist nun in seine Einschubstellung verschoben und die Führungsnase 55 des Sperrrings 5 befindet sich nun in einer Position axial unterhalb der Sperrstufe 45' sowie in Umfangsrichtung zur Sperrstufe 45' versetzt. Die Feder 44 ist nun komprimiert und wird über den Sperrring 5 mittels des Filtereinsatzes 3 in diesem Zustand gehalten. Ein Verschieben des Filtereinsatzes 3 zurück nach oben ist durch einen auf das Gehäuse 2 aufgesetzten, hier nicht dargestellten Deckel 21 unterbunden.

Der ringförmige Fortsatz 35 an der Unterseite der unteren Stirnscheibe 31 ragen nun zusammen mit der von ihm getragenen Dichtung 36 in den hohlzylindrischen Bodenteil 25' des Bodens 25 des Filtergehäuses 2 hinein und die Dichtung 36 liegt nun in dichtender Anlage an der Dichtfläche 26.

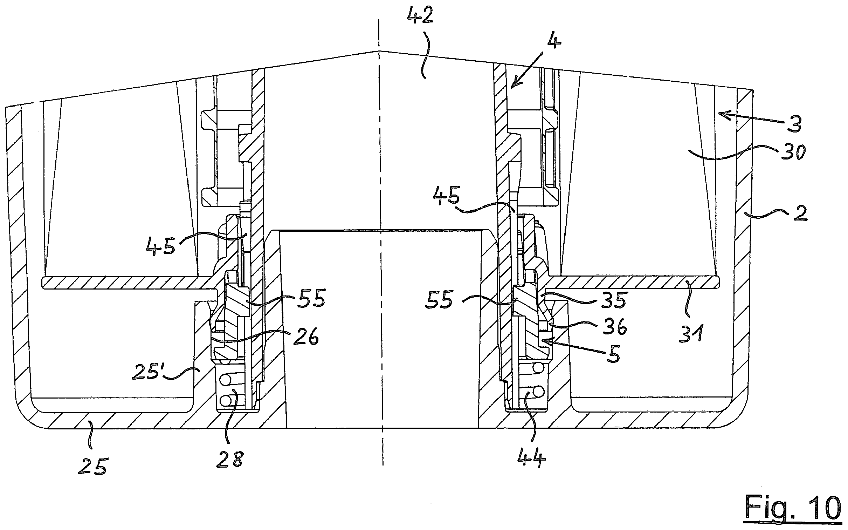

Die Figur 10 zeigt das Filter 1 aus Figur 9 in einem zweiten Längsschnitt, der durch die Mittelachse des Filtergehäuses 2 verläuft. Auch hier ist erkennbar, dass nun der Sperrring 5 und unter diesem die Feder 44 in dem Ringspalt 28 zwischen dem hohlzylindrischen Bodenteil 24' und dem unteren Teil des Standrohrs 4 liegen. Auch ist wieder sichtbar, dass der ringförmiger Fortsatz 35 der unteren Stirnscheibe 31 mit der Dichtung 36 in den Ringspalt 28 eingreift, wodurch die Dichtung 36 in dichtender Anlage an der Dichtfläche 26 liegt.

Radial innen am Sperrring 5 sind dessen Führungsnasen 55 sichtbar, die in der Führungskontur 45 am Außenumfang des Standrohrs 4 geführt sind.

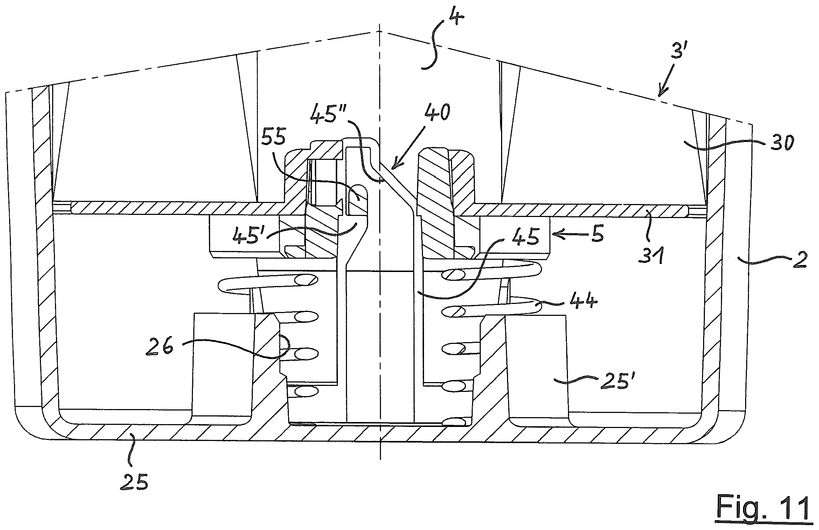

Figur 11 zeigt das Filter 1 aus Figur 8 bis 10 mit einem nicht passenden Fremd-Filtereinsatz 3' im Längsschnitt. Der Fremd-Filtereinsatzes 3' unterscheidet sich von dem Filtereinsatz 3 dadurch, dass er die für das Lösen der Riegeleinrichtung 40 erforderlichen Entriegelungsmittel 33 nicht aufweist. Dies führt dazu, dass beim Einführen des Filtereinsatzes 3' in das Filtergehäuse 2 die untere Stirnscheibe 31 den Sperrring 5 nur rein axial so weit nach unten bewegen kann, bis die Führungsnase 55 des Sperrrings 5 auf die Sperrstufe 45' der Führungskontur 45 auf dem Außenumfang des Standrohrs 4 auftrifft. Ein weiteres Einschieben des Filtereinsatzes 3' in das Filtergehäuse 2 ist nun nicht mehr möglich. Eine flüssigkeitsdichte Trennung in eine Rohseite und Reinseite des Filtergehäuses 2 wird nicht erreicht. Auch ein Anbringen des Deckels 21 am Filtergehäuse 2 ist ausgeschlossen, weil der Filtereinsatz 3' oberseitig noch zu weit aus dem Filtergehäuse 2 herausragt.

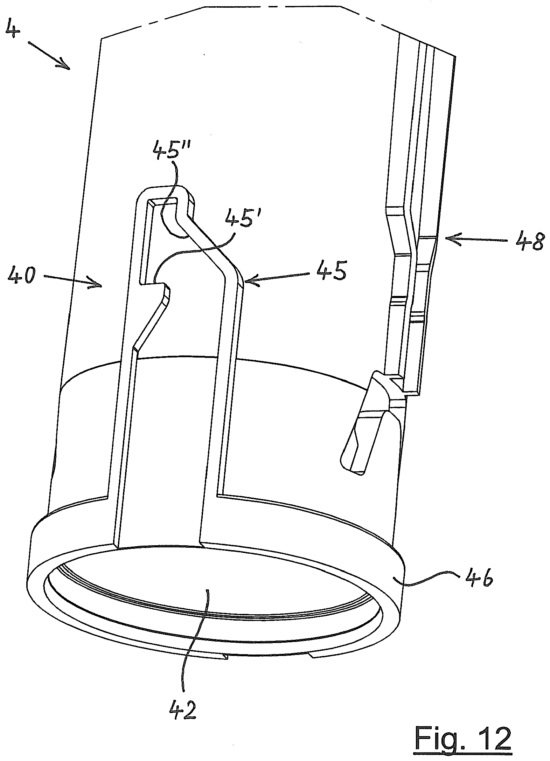

Die Figur 12 zeigt in vergrößerter Darstellung den unteren Teil des Standrohrs 4 des Filters 1 aus Figur 8 bis 11 als Einzelteil in Ansicht. Durch das hohle Innere des Standrohrs 4 verläuft der Flüssigkeitsablaufkanal 42. Am Außenumfang des Standrohrs 4 sind zum einen paarweise einander gegenüberliegend zwei Führungskonturen 45 als Teil der Riegeleinrichtung 40 und zum anderen in Umfangsrichtung dazwischen, ebenfalls paarweise einander gegenüberliegend, die Positionierführungsmittel 48 angeordnet, hier einstückig angeformt. Die Führungskontur 45 umfasst, wie vorstehend schon erläuterten, die Sperrstufe 45' sowie die Führungsschräge 45", welche dazu dient, den Sperrring 5 bei seinem Zurückführen in Ausschubrichtung wieder in die Sperrposition zu bringen, in der dessen Führungsnase 55 axial genau oberhalb der Sperrstufe 45' liegt. Das untere Ende 46 des Standrohrs 4 dient zum Verbinden mit dem Filtergehäuse 2.

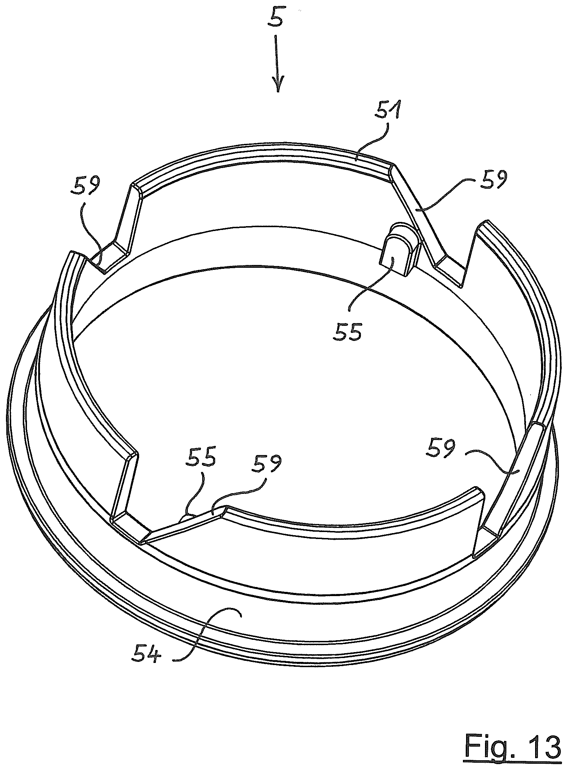

Figur 13 zeigt einen mit dem Standrohr 4 aus Figur 12 verschiebbar verbindbaren Sperrring 5 als Einzelteil in Ansicht. Der Sperrring 5 hat die Grundform eines niedrigen Hohlzylinders und besitzt radial außen die vorkragende Federabstützung 54, an deren Unterseite sich im zusammengebauten Zustand des Filters 1 die Feder 44 abstützt.

Dem Betrachter zugewandt ist in Figur 13 die umlaufende Oberkante 51 des Sperrrings 5, in welche mehrere, hier insgesamt vier, schiefe Ebenen 59 eingeformt sind. Diese schiefen Ebenen 59 dienen zum Zusammenwirken mit den oben erwähnten schiefen Ebenen 39 am Filtereinsatz 3. Am Innenumfang des Sperrrings 5 sind einander gegenüberliegend die zwei Führungsnase 55 radial nach innen vorspringend angeformt, welche zum Zusammenwirken mit der Führungskontur 45 am Standrohr 4 dienen.

Figur 14 zeigt den unteren Teil eines Filtereinsatzes 3 in Ansicht schräg von unten. Die untere Stirnscheibe 31 schließt den Filterstoffkörper 30 an seiner unteren Stirnseite ab. Im Zentrum der Stirnscheibe 31 liegt die Durchbrechung 31', welche von dem ringförmigen Fortsatz 35 umgeben ist. An seinem axial unteren Ende trägt der Fortsatz 35 die nach radial außen weisende Dichtung 36

An Innenumfang des Fortsatzes 35 liegen zum einen die Positionierführungsmittel 38, die zum Zusammenwirken mit den Positionierführungsmitteln 48 am Standrohr 4 dienen, und zum anderen die schiefen Ebenen 39, die zum Zusammenwirken mit den schiefen Ebenen 59 am Sperrring 5 dienen.

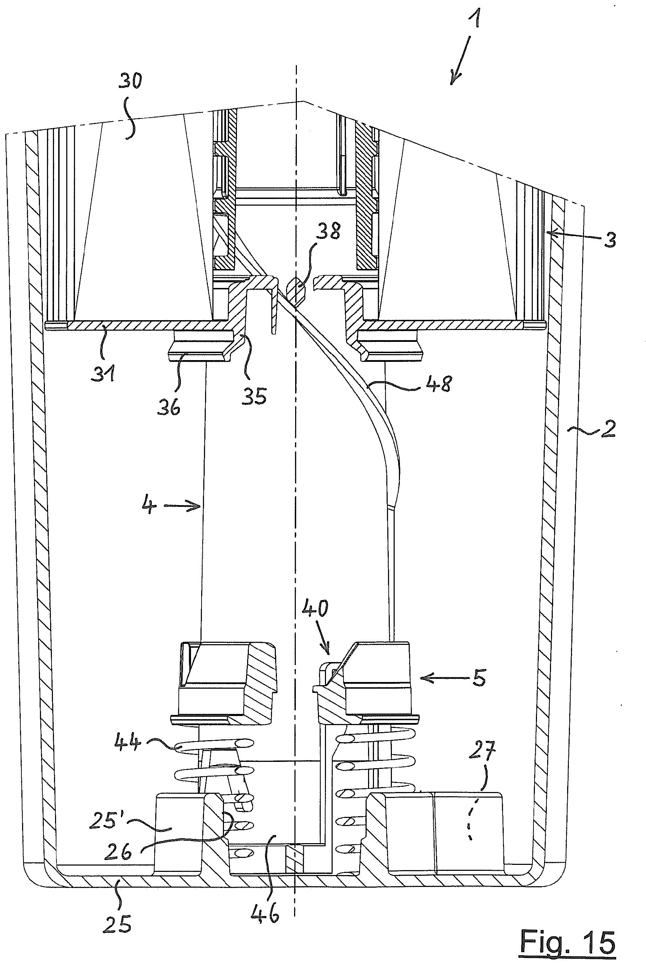

Die Figuren 15 bis 24 zeigen das Filter 1 in einer dritten Ausführung, für welche charakteristisch ist, dass das Filtergehäuse 2 zusätzlich einen Entleerungskanal 27 aufweist, welcher in einer exzentrischen Lage am Boden 25 des Gehäuses 2 angeordnet ist. Der Entleerungskanal 27 dient dazu, beim Herausziehen des Filtereinsatzes 3 einen Weg zur Entleerung des Filtergehäuses 2 von Flüssigkeit freizugeben, damit ein möglichst von Flüssigkeit freier Filtereinsatz 3 aus dem Filtergehäuse 2 entnommen werden kann. Dabei ist es erforderlich, dass im Betrieb des Filters 1 der Entleerungskanal 27 verschlossen ist.

Die Figur 15 zeigt das Filter 1 in der dritten Ausführung in einem Längsschnitt durch den unteren Bereich des Filters 1 mit einem erst teilweise eingeführten Filtereinsatz 3 im Längsschnitt. Die äußere Begrenzung des Filtereinsatzes 1 bildet wieder das becherförmige Filtergehäuse 2 mit dem Boden 25 und dessen hohlzylindrischem Bodenteil 25'. Zentral im Filtergehäuse 2 ist wieder ein Standrohr 4 angeordnet, das an seinem unteren Ende 46 mit dem Filtergehäuse 2 verbunden ist.

Auf dem unteren Teil des Standrohrs 4 ist wieder der Sperrring 5 angeordnet, der, ebenso wie die zugehörige Riegeleinrichtung 40, dem zuvor beschriebenen Ausführungsbeispiel entspricht. Unter dem Sperrring 5 liegt wieder die Feder 44, die auch hier als Schrauben-Druckfeder ausgeführt ist.

Im oberen Teil der Figur 15 ist der untere Teil des Filtereinsatzes 3 zu Beginn seines Einführens in das Filtergehäuse 2 sichtbar. Auch hier hat der Filtereinsatz 3 einen Filterstoffkörper 30, dessen untere Stirnseite von der Stirnscheibe 31 abgedeckt ist. Von der Stirnscheibe 31 erstreckt sich konzentrisch der ringförmige Fortsatz 35 mit der radial nach außen weisenden Dichtung 36.

Auf dem Außenumfang des Standrohrs 4 verläuft das Positionierführungsmittel 48 in Form einer von oben nach unten gesehen zunächst schräg verlaufenden Wendel, die dann weiter unten in einen axialen Verlauf übergeht. Mit dem Positionierführungsmittel 48 wirkt das am Filtereinsatz 3 vorhandene Positionierführungsmittel 38 zusammen, indem das Positionierführungsmittel 38 auf dem Positionierführungsmittel 48 entlang geleitet. Durch die Wendelform des oberen Teils des Positionierführungsmittels 48 wird der Filtereinsatz 3 bei seiner Bewegung nach unten zugleich in Umfangsrichtung verdreht, was dazu dient, den Filtereinsatz 3 in eine gewünschte Verdrehstellung relativ zum Filtergehäuse 2 und zum Entleerungskanal 27 zu bringen, bevor der Filtereinsatz 3 seine endgültige Einbaulage erreicht.

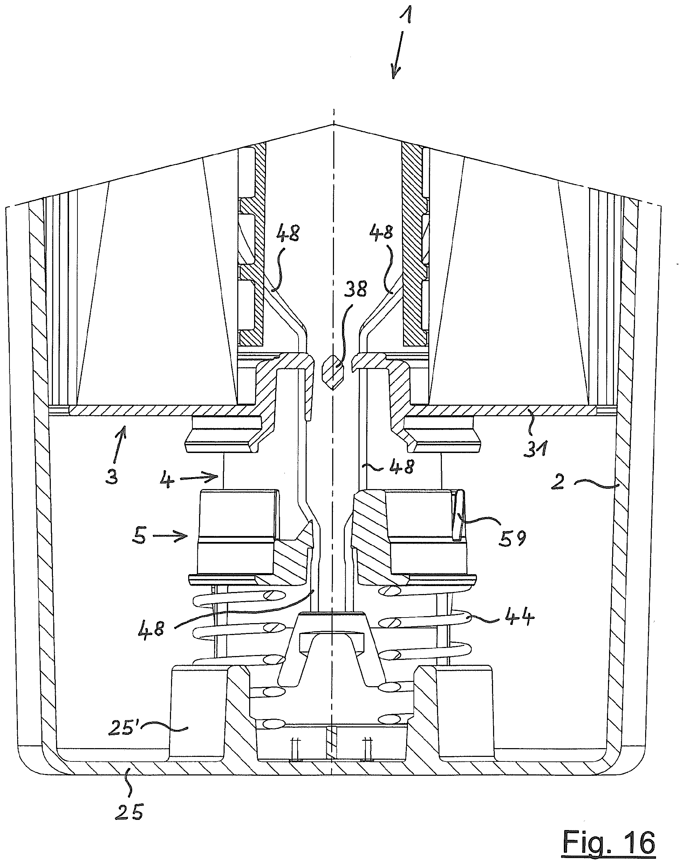

Figur 16 zeigt das Filter 1 aus Figur 15 mit weiter eingeführtem Filtereinsatz 3 in einem weiteren, gegenüber Figur 15 verdrehten Längsschnitt. Der Schnitt verläuft nun so, dass die auf dem Außenumfang des Standrohrs 4 angeordneten Positionierführungsmittel 48 dem Betrachter zugewandt sind. Zwischen den Positionierführungsmittel 48 liegt das Positionierführungsmittel 38 des Filtereinsatzes 3. Der Sperrring 5 befindet sich nach wie vor in seiner Ausschubstellung, da die untere Stirnscheibe 31 des Filtereinsatzes 3 noch Abstand vom Sperrring 5 hat. Am Außenumfang des Sperrrings 5 ist eine von dessen schiefen Ebenen 59 sichtbar, die beim weiteren Verschieben des Filtereinsatzes 3 nach unten mit den hier nicht sichtbaren schiefen Ebenen 39 am Innenumfang der Stirnscheibe 31 zusammenwirken.

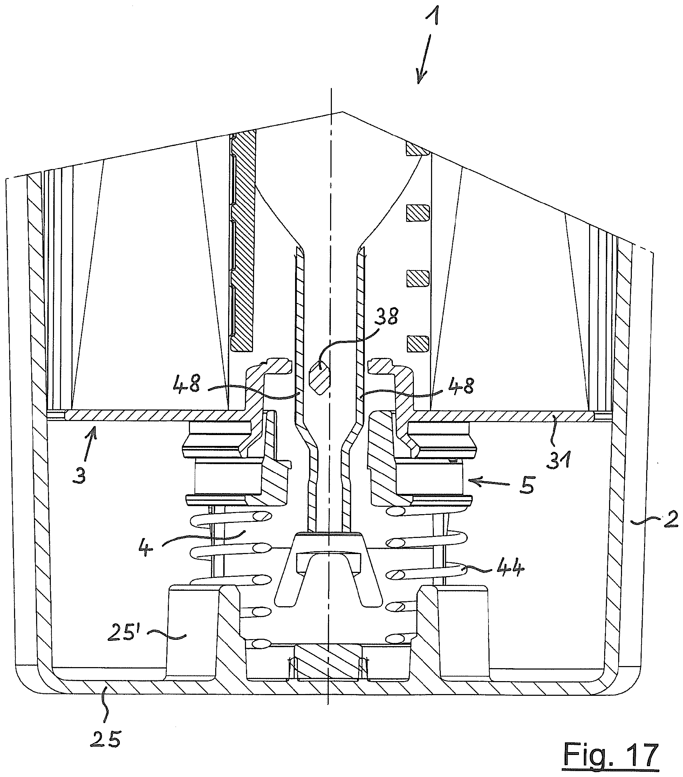

Figur 17 zeigt das Filter 1 aus Figur 15 und 16 mit noch weiter eingeführtem Filtereinsatz 3, wieder im Längsschnitt mit zu der Schnittebene von Figur 16 paralleler Schnittebene. Der Filtereinsatz 3 mit seiner unteren Stirnscheibe 31 steht nun unmittelbar vor einen Kontakt mit dem Sperrring 5, die sich auch jetzt noch in seiner Ausschubstellung befindet. Das am Filtereinsatz 3 vorhandene Positionierführungsmittel 38 befindet sich zwischen den axial verlaufenden Abschnitten der Positionierführungsmittel 48, die weiter nach unten ihren Abstand verkleinern, um die endgültige Positionierung des Filtereinsatzes 3 zu bewirken.

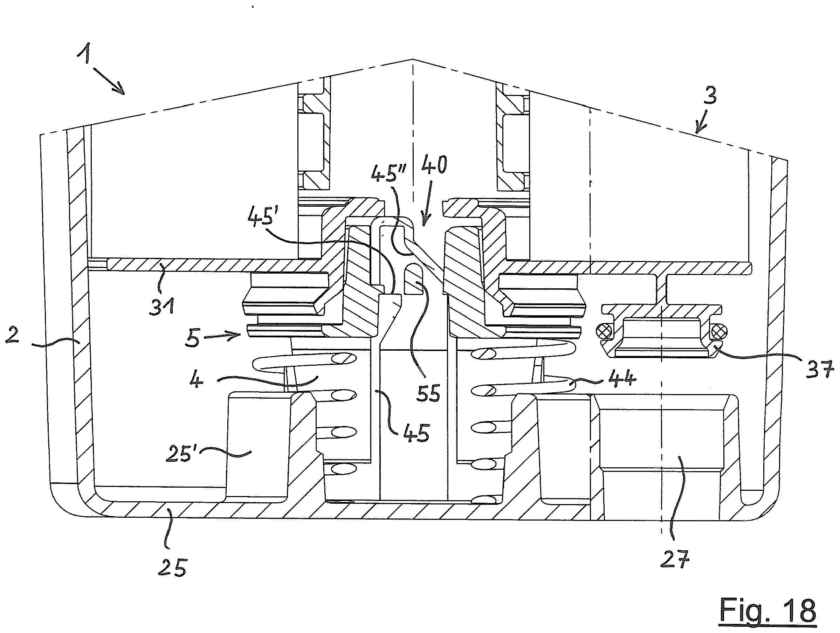

In Figur 18 ist das Filter 1 aus Figur 15 bis 17 mit nochmals weiter eingeführtem Filtereinsatz 3 wieder im Längsschnitt dargestellt, wobei der Schnitt nun so gelegt ist, dass die Führungskontur 45 auf dem Außenumfang des Standrohrs 4 dem Betrachter zugewandt ist und dass der Schnitt durch den Entleerungskanal 27 geht. Der Filtereinsatz 3 ist nun soweit auf dem Standrohr 4 nach unten verschoben, dass die untere Stirnscheibe 31 mit dem Sperrring 5 in Eingriff getreten ist. Durch die in Figur 18 nicht sichtbaren, zusammenwirkenden schiefen Ebenen 39 und 59 ist die Riegeleinrichtung 40 durch ein gewisses Verdrehen des Sperrrings 5 relativ zum Standrohr 4 entriegelt. In diesem entriegelten Zustand liegt die Führungsnase 55 des Sperrrings 5 in Umfangsrichtung versetzt zur Sperrstufe 45' der Führungskontur 45. Die Sperrung ist somit aufgehoben und der Filtereinsatz 3 kann zusammen mit dem in Anlage an ihm befindlichen Sperrring 5 gegen die Kraft der Feder 44 weiter nach unten bewegt werden, wobei diese Bewegung nach unten auch hier vorzugsweise mittels des Aufschraubens eines Deckels 21 auf das Filtergehäuse 2 erfolgt.

Rechts in Figur 18 ist an der Unterseite der Stirnscheibe 31 der mit dieser einstückig ausgeführte Verschlussdorn 37 sichtbar, der nun durch die Führung mittels der Positionierführungsmittel 38 und 48 seine zu dem Entleerungskanal 27 eingriffsgerechte Position erreicht hat. Eine Verdrehung des Filtereinsatzes 3 mit dem Verschlussdorn 37 relativ zum Entleerungskanal 27 ist jetzt aufgrund der Führung des Filtereinsatzes 3 mittels der Positionierführungsmittel 38 und 48, die in Figur 18 nicht sichtbar sind, nicht mehr möglich.

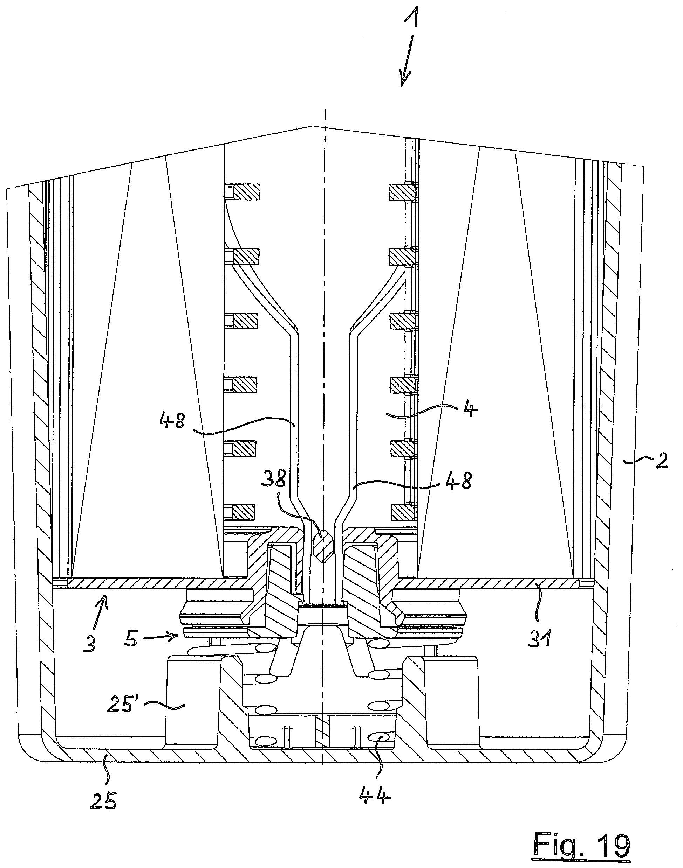

Figur 19 zeigt das Filter 1 aus Figur 15 bis 18 mit nochmals weiter eingeführtem Filtereinsatz 3 in einem Längsschnitt, der so gelegt ist, dass nun wieder die Positionierführungsmittel 48 auf dem Außenumfang des Standrohrs 4 dem Betrachter zugewandt sind. Durch das weitere axiale Verschieben des Filtereinsatzes 3 nach unten ist nun dessen Positionierführungsmittel 38 in denjenigen Bereich der Positionierführungsmittel 48 gelangt, in dem diese mit einem in Umfangsrichtung gesehen geringen Abstand in Axialrichtung verlaufen. Dabei ist der Abstand zwischen den Positionierführungsmitteln 48 so gering, dass das darin geführte Positionierführungsmittel 38 des Filtereinsatzes 3 gerade noch ein ausreichendes Bewegungsspiel hat. Zugleich ist der Sperrring 5 durch den weiter nach unten bewegten Filtereinsatz 3 auf dem Standrohr 4 gegen die Kraft der Feder 44 weiter nach unten verschoben.

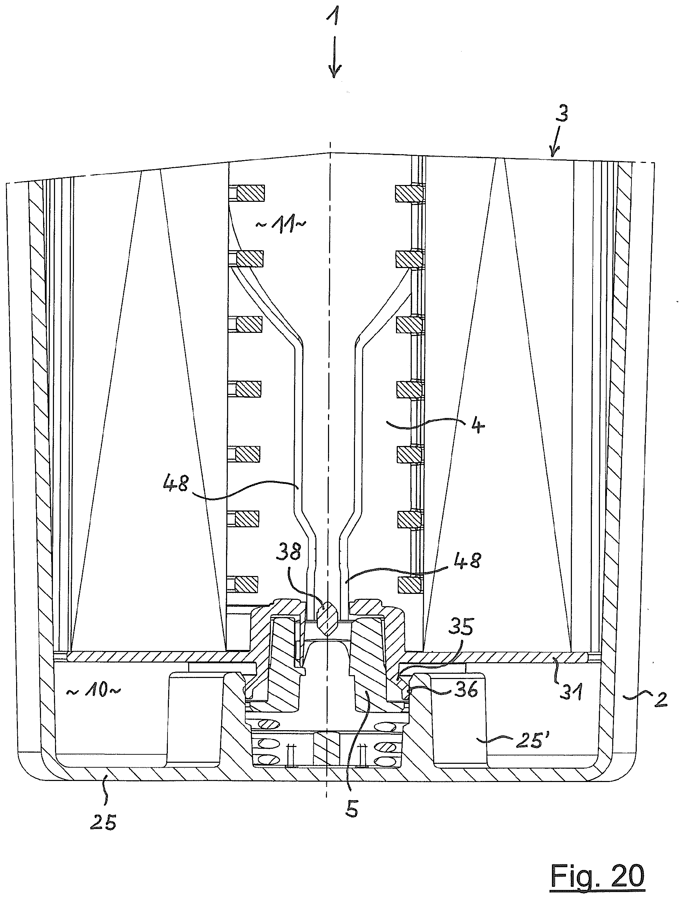

Figur 20 zeigt nun das Filter 1 aus Figur 15 bis 19 mit vollständig eingeführtem Filtereinsatz 3 in einem in der Schnittebene von Figur 19 liegenden weiteren Längsschnitt. Der Sperrring 5 greift nun in den hohlzylindrischen Bodenteil 24' ein, ebenso der ringförmige Fortsatz 35 mit dem Dichtring 36. Das Positionierführungsmittel 38 des Filtereinsatzes 3 befindet sich nun am unteren Ende der Positionierführungsmittel 48. Somit ist nun nach dem Anbringen des Deckels 21 das Filter 1 betriebsbereit.

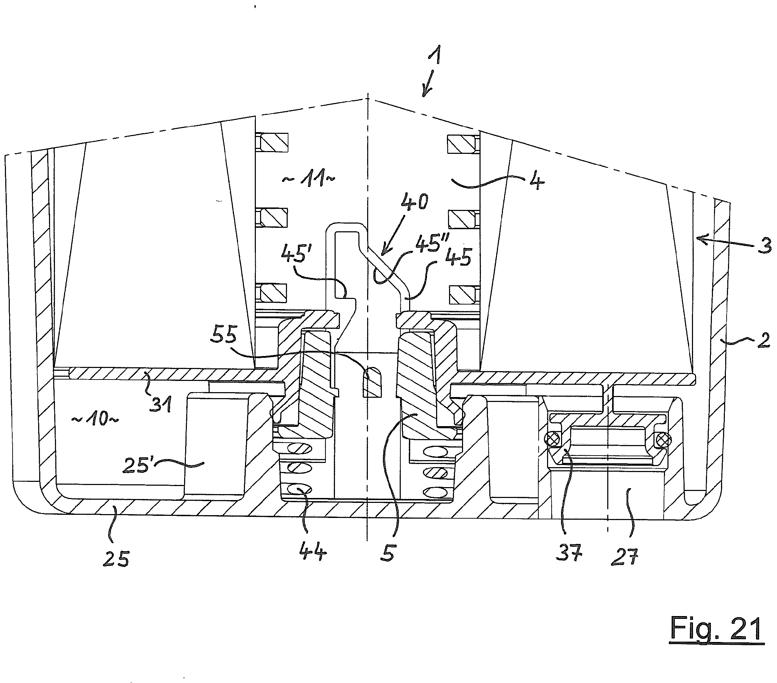

Figur 21 zeigt das Filter1 aus Figur 20 in einem zweiten, um 90° gedrehten Längsschnitt. Hier fällt der Blick wieder auf den Bereich des Außenumfangs des Standrohrs 4 mit der Riegeleinrichtung 40 und der zugehörigen Führungskontur 45. Die Führungsnase 55 des Sperrrings 5 liegt nun in Umfangsrichtung und in Axialrichtung zu der Sperrstufe 45' versetzt, was gleichbedeutend mit der Entriegelungsstellung der Riegeleinrichtung 40 ist. Der Verschlussdorn 37 liegt nun dichtend im oberen Endbereich des Entleerungskanals 27, wodurch keine Flüssigkeit mehr aus dem Inneren des Filtergehäuses 2 in den Entleerungskanal 27 fließen kann.

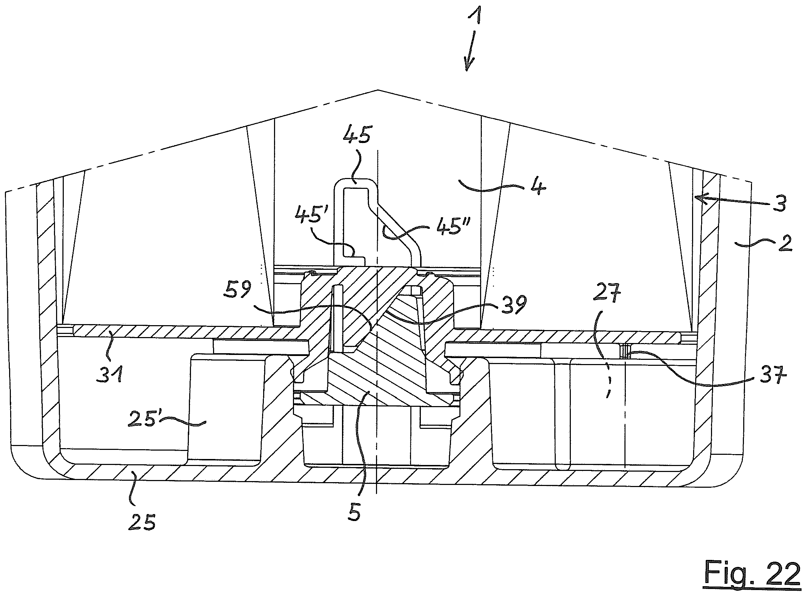

In Figur 22 ist das Filter 1 aus Figur 20 und 21 in einem dritten, zum vorhergehenden Längsschnitt parallel nach vorne versetzten Längsschnitt dargestellt, so dass nun die Schnittebene durch je eine der schiefen Ebenen 39 und 59 am Filtereinsatz 3 und am Sperrring 5 verläuft. Die schiefen Ebenen 39 und 59 stehen nun in vollem Eingriff miteinander, was bedeutet, dass der jetzt vollständig in das Gehäuse 2 eingeführte Filtereinsatz 3 durch seine axiale Bewegung den Sperrring 5 um einen gewissen, für die Entriegelung der Riegeleinrichtung 40 ausreichenden. Winkel in Umfangsrichtung verdreht hat. Der Entleerungskanal 27 mit dem dichtend darin liegenden Verschlussdorn 37 liegt nun rechts unten in Figur 22 hinter der Schnittebene.

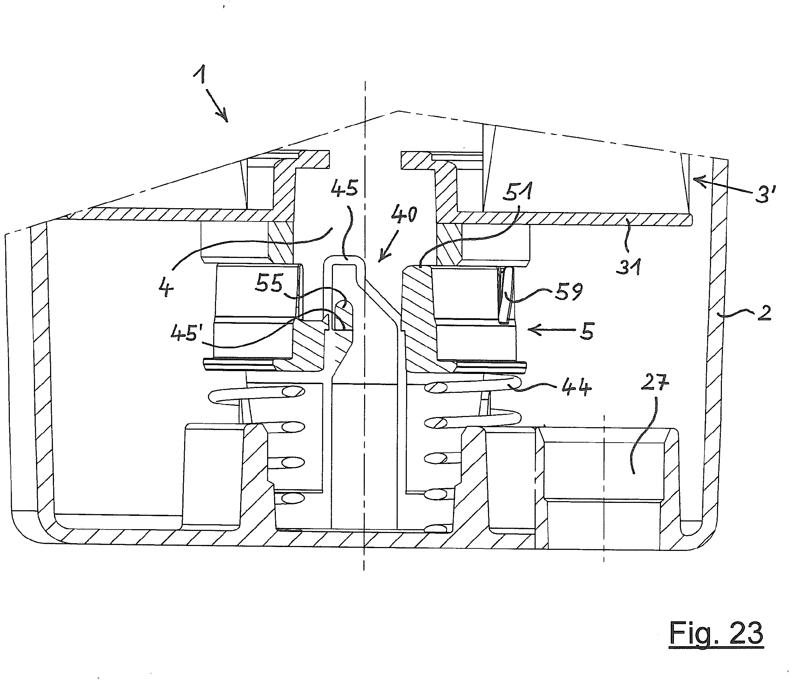

Figur 23 zeigt das Filter 1 aus den Figuren 15 bis 22 mit einem nicht passenden Fremd-Filtereinsatz 3' in einem Längsschnitt, der so gelegt ist, dass der Außenumfang des Standrohrs 4 mit der Riegeleinrichtung 40 dem Betrachter zugewandt ist. Der Fremd-Filtereinsatzes 3' drückt hier mit seiner unteren Stirnscheibe 31 den Sperrring 5 über dessen Oberkante 51 in Axialrichtung nach unten, jedoch wird eine weitere Bewegung nach unten gesperrt, weil nach einem kurzen Bewegungsweg die Führungsnase 55 des Sperrrings 5 auf die Sperrstufe 45' der Führungskontur 45 trifft, denn der hier dargestellte Fremd-Filtereinsatz 3' besitzt nicht die für das Entriegeln der Riegeleinrichtung 40 nötigen Mittel, insbesondere nicht die notwendigen schiefen Ebenen 39. Somit wirkt hier auf die schiefen Ebenen 59 des Sperrrings 5 keine in Umfangsrichtung weisende Kraft ein, was dazu führt, dass der Sperrring 5 seine Verriegelungsposition beibehält. Da der Fremd-Filtereinsatz 3' nicht vollständig in das Gehäuse 2 eingeführt werden kann, wird auch keine Trennung zwischen Rohseite und Reinseite erreicht und kann der Deckel des Gehäuses 2 nicht angebracht werden. Schließlich fehlt auch der Verschlussdorn für den Entleerungskanal 37 bei dem Fremd-Filtereinsatz 3', so dass mit diesem das Filter 1 nicht betriebsfähig gemacht werden kann.

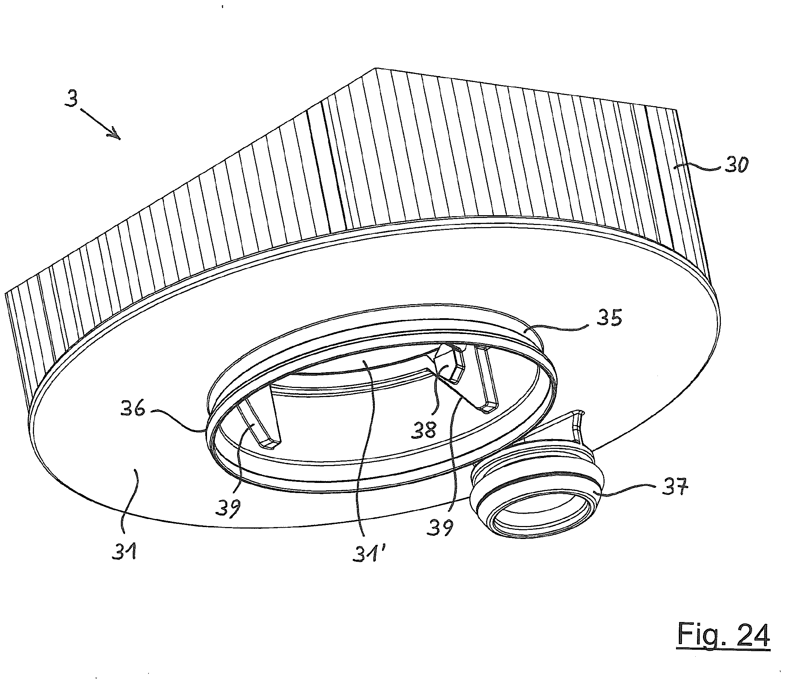

Figur 24 schließlich zeigt einen zu dem Filter 1 gemäß Figur 15 bis 22 passenden Filtereinsatz 3 in Ansicht schräg von unten, wobei hier nur der untere Teil des Filtereinsatzes 3 dargestellt ist. Es ist ersichtlich, dass der Filterstoffkörper 30 unten von der unteren Stirnscheibe 31 abgedeckt ist, die im Übrigen identisch mit der Stirnscheibe 31 gemäß Figur 14 ausgeführt ist. Zusätzlich besitzt die Stirnscheibe 31 nach Figur 24 den exzentrisch angeordneten Verschlussdorn 37, der hier einstückig mit der Stirnscheibe 31 ausgeführt ist. Durch einen auf den Verschlussdorn 37 aufgesetzten separaten Dichtring aus einem Elastomer oder Gummi kann die Dichtwirkung optimiert werden.

**Bezugszeichenliste:**

| Zeichen | Bezeichnung |
|---|---|
| 1 | Filter |
| 10 | Rohseite |
| 11 | Reinseite |
| | |
| 2 | Filtergehäuse |
| 21 | Deckel |
| 22 | Verschraubung |
| 23 | Dichtung in 22 |
| 24 | Rastzungen an 21 |
| 25 | Boden von 2 |
| 25' | hohlzylindrischer Bodenteil |
| 26 | Dichtfläche in 25' |
| 27 | Entleerungskanal |
| 28 | Ringspalt |
| | |
| 3 | Filtereinsatz |
| 3' | Fremd-Filtereinsatz |
| 30 | Filterstoffkörper |
| 30' | Stützgitter in 30 |
| 31 | erste (untere) Stirnscheibe |
| 31' | Durchbrechung in 31 |
| 32 | zweite (obere) Stirnscheibe |
| 33 | Entriegelungsmittel (Rippen) |
| 34 | Rastzungen an 32 |
| 35 | ringförmiger Fortsatz an 31 |
| 36 | Dichtung an 35 |
| 37 | Verschlussdorn für 27 |
| 38 | Positionierführungsmittel an 3 |
| 39 | schiefe Ebenen an 31 |
| 4 | Standrohr |
| 40 | Riegeleinrichtung |
| 41 | Sperrzungen |
| 41' | Sperrfläche |
| 42 | Flüssigkeitsablaufkanal in 4 |
| 43 | Nocken an 41 |
| 44 | Feder |
| 44' | Federabstützung |
| 45 | Führungskontur für 5 |
| 45' | Sperrstufe |
| 45" | Führungsschräge |
| 46 | unteres Ende von 4 |
| 48 | Positionierführungsmittel an 4 |
| | |
| 5 | Sperrring |
| 51 | Oberkante |
| 51' | Unterkante |
| 54 | Federabstützung |
| 55 | Führungsnase an 5 |
| 59 | schiefe Ebenen an 5 |

## Patentansprüche

1. Filter (1) für ein fluides Medium, insbesondere Öl-, Wasser-, Kraftstoff- oder Luftfilter einer Brennkraftmaschine, mit einem Filtergehäuse (2) und einem damit lösbar verbindbaren Deckel (21), mit einem austauschbaren Filtereinsatz (3), der aus einem hohlzylindrischen Filterstoffkörper (30) und zwei diesen stirnseitig einfassenden Stirnscheiben (31, 32) besteht, von denen die eine Stirnscheibe (31) eine zentrale Durchbrechung (31') aufweist, wobei der Filtereinsatz (3) mit der durchbrochenen Stirnscheibe (31) voran auf ein zentrales, einen Teil des Filtergehäuses (2) bildendes Standrohr (4) aufsteckbar ist, wobei auf dem Standrohr (4) ein Sperrring (5) axial verschiebbar geführt ist, wobei der Sperrring (5) mit einer in zum freien Ende des Standrohrs (4) weisender Ausschubrichtung wirkenden Kraft vorbelastet ist, wobei der Sperrring (5) in einer Ausschubstellung durch eine Riegeleinrichtung (40) gegen ein Einschieben gesperrt ist, wobei von dem Filtereinsatz (3) geführte Entriegelungsmittel (33) vorgesehen sind, die bei einem Aufschieben des Filtereinsatzes (3) auf das Standrohr (4) die Riegeleinrichtung (40) in Entriegelungsrichtung betätigen und ein Einschieben des Sperrrings (5) und des Filtereinsatzes (3) freigeben, und wobei im in das Filtergehäuse (2) eingebauten Zustand des Filtereinsatzes (3) eine an der Stirnscheibe (31) oder an dem Sperrring (5) vorgesehene Dichtung (36) im Zusammenwirken mit einer Dichtfläche (26) des Filtergehäuses (2) eine Rohseite (10) und eine Reinseite (11) des Filters (1) voneinander trennt,
**dadurch gekennzeichnet,**
**dass** bei in Ausschubstellung befindlichem Sperrring (5) und in axialer Anlage am Sperrring (5) befindlichem Filtereinsatz (3) die an der Stirnscheibe (31) des Filtereinsatzes (3) oder an dem Sperrring (5) vorgesehene Dichtung (36) in Ausschubrichtung von der zugehörigen Dichtfläche (26) des Filtergehäuses (2) axial entfernt und durch die Riegeleinrichtung (40) in der von der Dichtfläche (26) entfernten, nicht dichtenden Position gehalten ist und
**dass** bei in Einschubstellung befindlichem Filtereinsatz (3) oder Sperrring (5) bei entriegelter Riegeleinrichtung (40) die Dichtfläche (26) und die Dichtung (36) dichtend zusammenwirken.

2. Filter nach Anspruch 1, **dadurch gekennzeichnet, dass** das Filtergehäuse (2) einen Boden (25) mit einem zentralen hohlzylindrischen Bodenteil (25') hat und dass die filtergehäuseseitige Dichtfläche (26) an einer Innenumfangsfläche oder Außenumfangsfläche oder Stirnfläche des hohlzylindrischen Bodenteils (25') angeordnet ist.

3. Filter nach Anspruch 1 oder 2, **dadurch gekennzeichnet, dass** die Entriegelungsmittel (33) an dem Filtereinsatz (3) oder an einem separaten, vor dem Filtereinsatz (3) auf das Standrohr (4) aufsteckbaren Entriegelungsmittelkörper angeordnet oder angeformt sind.

4. Filter nach Anspruch 3, **dadurch gekennzeichnet, dass** die Entriegelungsmittel (33) an der die Durchbrechung (31') aufweisenden Stirnscheibe (31) des Filtereinsatzes (3) oder an einem einen Teil des Filtereinsatzes (3) bildenden, im Inneren des Filterstoffkörpers (30) zwischen den Stirnscheiben (31, 32) angeordneten Stützkörper (30') angeordnet oder angeformt sind.

5. Filter nach einem der Ansprüche 1 bis 4, **dadurch gekennzeichnet, dass** die Riegeleinrichtung (40) durch mit dem Standrohr (4) einstückig ausgeführte oder fest verbundene, in Radialrichtung bewegliche Sperrzungen (41) mit je einer in Axialrichtung weisenden Sperrfläche (41') gebildet ist, dass die Sperrzungen (41) mit einer in Verriegelungsrichtung wirkenden Kraft vorbelastet sind und jeweils mit ihrer Sperrfläche (41') den Sperrring (5) in seiner Ausschubstellung gegen axiales Einschieben relativ zum Standrohr (4) sperren und dass durch die Entriegelungsmittel (33) die Sperrzungen (40) beim Aufstecken des Filtereinsatzes (3) auf das Standrohr (4) unmittelbar in radialer Richtung in ihre Entriegelungsstellung bewegbar sind.

6. Filter nach Anspruch 5, **dadurch gekennzeichnet, dass** der Sperrring (5) hohlzylindrisch ist und außen auf das Standrohr (4) aufgesetzt ist und dass die Sperrzungen (41) am Standrohr (4) vorgesehen sind und jeweils eine radial nach außen gerichtete Sperrnase aufweisen, wobei die Sperrnasen mit einer Stirnseite des Sperrrings (5) in und außer Eingriff bringbar sind.

7. Filter nach Anspruch 5 oder 6, **dadurch gekennzeichnet, dass** die Sperrzungen (41) jeweils einen radial in Verriegelungsrichtung vorragenden Nocken (43) aufweisen und dass beim Aufstecken des Filtereinsatzes (3) auf das Standrohr (4) die Entriegelungsmittel (33) mit den Nocken (43) in Eingriff treten und die Sperrzungen (41) radial in Entriegelungsrichtung verschwenken.

8. Flüssigkeitsfilter nach einem der Ansprüche 5 bis 7, **dadurch gekennzeichnet, dass** jeder Sperrzunge (41) ein deren Bewegung in Verriegelungsrichtung begrenzender Anschlag zugeordnet ist.

9. Filter nach einem der Ansprüche 1 bis 4, **dadurch gekennzeichnet, dass** die Riegeleinrichtung (40) durch am Außenumfang des Standrohrs (4) und am Innenumfang des Sperrrings (5) angeordnete Führungsmittel (45 und 55) gebildet ist, die zusammen eine Sperrstufe (45') und eine dazu in Umfangsrichtung versetzte anschließende axiale oder schräge Führung bilden, dass die Führungsmittel (45 und 55) mittels der Sperrstufe (45') den Sperrring (5) in seiner Ausschubstellung gegen axiales Einschieben relativ zum Standrohr (4) sperren und dass beim Aufstecken des Filtereinsatzes (3) auf das Standrohr (4) der Sperrring (5) durch die Entriegelungsmittel (33) in Umfangsrichtung in eine Entriegelungsstellung verdrehbar und dann entlang der axialen oder schrägen Führung einschiebbar ist.

10. Filter nach einem der Ansprüche 1 bis 9, **dadurch gekennzeichnet, dass** am Außenumfang des Standrohrs (4) mit den Entriegelungsmitteln (33) oder mit am Innenumfang des Filtereinsatzes (3) zusätzlich angeordneten Führungsmitteln (38) zusammenwirkende Positionierführungsmittel (48) vorgesehen sind, die beim Aufstecken des Filtereinsatzes (3) die Entriegelungsmittel (33) in Umfangsrichtung in eine für die Sperrzungen (41) des Standrohrs (4) oder für die schiefen Ebenen (59) des Sperrrings (5) eingriffsgerechte Stellung zwangsführen und dann den Filtereinsatz (3) gegen Verdrehen in Umfangsrichtung sperren.

11. Filter nach einem der Ansprüche 1 bis 10, **dadurch gekennzeichnet, dass** zur Bildung eines codierten Schloss-Schlüssel-Systems unterschiedlich ausgeführte Riegeleinrichtungen (40) und unterschiedlich ausgeführte Entriegelungsmittel (33) vorgesehen sind, wobei eine bestimmte Ausführung der Riegeleinrichtung (40) nur mittels einer bestimmten, passenden Ausführung der Entriegelungsmittel (33) entriegelbar ist.

12. Filter nach einem der Ansprüche 1 bis 11, **dadurch gekennzeichnet, dass** zur Bildung eines Filterumgehungsventils eine Stirnscheibe (31) des Filtereinsatzes (3) einen Ventilsitz für einen filtergehäuseseitigen, mit einer in Ventilschließrichtung wirkenden Kraft vorbelasteten Ventilkörper aufweist.

13. Filter nach einem der Ansprüche 1 bis 12, **dadurch gekennzeichnet, dass** das Filtergehäuse (2) in seinem Boden (25) einen exzentrisch angeordneten Entleerungskanal (27) aufweist, dass der Filtereinsatz (3) an der vom Filterstoffkörper (30) abgewandten Seite der dem Boden (25) zugewandten Stirnscheibe (31) einen axial vorstehenden, exzentrischen Verschlussdorn (37) für den Entleerungskanal (27) aufweist und dass am Innenumfang des Filtereinsatzes (3) und am Außenumfang des Standrohrs (4) zusammenwirkende Positionierführungsmittel (38, 48) vorgesehen sind, die beim Aufstecken des Filtereinsatzes (3) auf das Standrohr (4) den Filtereinsatz (3) in Umfangsrichtung in eine für den Entleerungskanal (27) eingriffsgerechte Stellung des Verschlussdorns (37) zwangsführen.

## Claims

1. A filter (1) for a fluid medium, particularly an oil, water, fuel or air filter of an internal combustion engine, having a filter housing (2) and a cover (21) releasably connectable thereto; having a replaceable filter insert (3) consisting of a hollow-cylindrical filter medium body (30) and two end discs (31, 32) enclosing it at its end faces, of which the one end disc (31) has a central aperture (31'), wherein the filter insert (3) can be mounted with the apertured end disc (31) forward onto a central standpipe (4) that forms part of the filter housing (2); wherein a locking ring (5) is guided for axial displacement on the standpipe (4); wherein the locking ring (5) is preloaded with a force that acts in a direction of extension and that is oriented towards the free end of the standpipe (4); wherein the locking ring (5) in an extended position is secured by a latching device (40) against insertion; wherein unlatching means (33) guided by the filter insert (3) are provided to urge the latching device (40) in the unlocking direction when the filter insert (3) is pushed onto the standpipe (4) and which clear the locking ring (5) and the filter insert (3) for insertion, and wherein, when the filter insert (3) is installed in the filter housing (2), a seal (36) provided on the end disc (31) or on the locking ring (5) and interacting with a sealing surface (26) of the filter housing (2) separates a raw side (10) from a pure side (11) of the filter (1),
**characterised in that**
with the locking ring (5) in an extended position and with the filter insert (3) axially abutting the locking ring (5), the seal (36) provided on the end disc (31) of the filter insert (3) or on the locking ring (5) is axially apart from the associated sealing surface (26) of the filter housing (2) in the direction of extension and it is held by the latching device (40) in the non-sealing position apart from the sealing surface (26), and
that with the filter insert (3) or the locking ring (5) in the inserted position and the latching device (40) unlocked, the sealing surface (26) and the seal (36) interact in a sealing manner.

2. The filter according to claim 1, **characterised in that** the filter housing (2) has a bottom (25) with a central hollow-cylindrical bottom part (25') and that the sealing surface (26) on the filter housing side is arranged on an inner circumferential surface or an outer circumferential surface or an end face of the hollow-cylindrical bottom part (25').

3. The filter according to claim 1 or 2, **characterized in that** the unlatching means (33) are arranged on the filter insert (3) or they are arranged or formed on a separate unlatching means body that can be mounted onto the standpipe (4) before the filter insert (3).

4. The filter according to claim 3, **characterised in that** the unlatching means (33) are arranged or formed on the end disc (31) with the aperture (31'), of the filter insert (3), or on a support body (30') that forms part of the filter insert (3) and is situated in the interior of the filter medium body (30) between the end discs (31, 32).

5. The filter according to one of claims 1 to 4, **characterised in that** the latching device (40) is formed by radially movable locking tabs (41) that are integral with the standpipe (4) or affixed thereto, having one axially directed locking surface (41') each, that the locking tabs (41) are pre-loaded by a force acting in the latching direction, and with their respective locking surface (41') they secure the locking ring (5) in its extended position against axial insertion relative to the standpipe (4) and that when the filter insert (3) is mounted onto the standpipe (4) the locking tabs (41) are directly radially movable into their unlatched position by the unlatching means (33).

6. The filter according to claim 5, **characterised in that** the locking ring (5) is hollow-cylindrical and is mounted on the outside of the standpipe (4) and that the locking tabs (41) are provided on the standpipe (4), each one having a radially outwardly directed locking lug, wherein the locking lugs can be moved into and out of engagement with an end face of the locking ring (5).

7. The filter according to claim 5 or 6, **characterised in that** the locking tabs (41) each have cams (43) radially projecting in the latching direction and that when the filter insert (3) is mounted onto the standpipe (4), the unlatching means (33) move into engagement with the cams (43) and the locking tabs (41) swing radially in the unlatching direction.

8. The liquid filter according to one of claims 5 to 7, **characterised in that** each locking tab (41) has a stop allocated to it that limits its movement in the latching direction.

9. The filter according to one of claims 1 to 4, **characterised in that** the latching device (40) is formed by guide means (45 and 55) arranged on the outer circumference of the standpipe (4) and on the inner circumference of the locking ring (5), which guide means together form a locking stage (45') and circumferentially offset therefrom an axial or inclined connected guideway, that the guide means (45 and 55) lock the locking ring (5) in its extended position by means of the locking stage (45') against axial insertion relative to the standpipe (4), and that when the filter insert (3) is mounted onto the standpipe (4) the locking ring (5) can be rotated circumferentially by the unlatching means (33) into an unlatched position, whereupon the locking ring (5) can be inserted along the axial or inclined guideway.

10. The filter according to one of claims 1 to 9, **characterised in that** positioning guide means (48) are provided on the outer circumference of the standpipe (4) and interact with the unlatching means (33) or with guide means (38) additionally arranged on the inner circumference of the filter insert (3), which guide means forcibly guide the unlatching means (33) circumferentially into a position suitable for engagement for the locking tabs (41) of the standpipe (4) or for the inclined planes (59) of the locking ring (5), whereupon they lock the filter insert (3) against rotation in the circumferential direction.

11. The filter according to one of claims 1 to 19, **characterised in that** differently designed latching devices (40) and differently designed unlatching means (33) are provided to form an encrypted lock-and-key system, wherein a specific design of the latching device (40) can only be unlatched by means of a specific, matching design of the unlatching means (33).

12. The filter according to one of claims 1 to 11, **characterised in that** to create a filter bypass valve an end disc (31) of the filter insert (3) has a valve seat for a valve body situated on the filter housing side, that is preloaded by a force acting in the valve-closing direction.

13. The filter according to one of claims 1 to 12, **characterised in that** the filter housing (2) has an eccentrically arranged drainage channel (27) in its bottom (25), that the filter insert (3) has on that side of the end disc (31) turned towards the bottom (25), which faces away from the filter medium body (30), an axially projecting, eccentric closure pin (37) for the drainage channel (27), and that on the inner circumference of the filter insert (3) and on the outer circumference of the standpipe (4) interacting positioning guide means (38, 48) are provided, which forcibly guide the filter insert (3) circumferentially into a position of the closure pin (37) that is suitable for the drainage channel (27), for engagement when the filter insert (3) is mounted onto the standpipe (4).

## Revendications

1. Filtre (1) pour un milieu fluide, notamment filtre à huile, eau, carburant ou à air d'un moteur à combustion interne, doté d'un carter de filtre (2) et d'un couvercle (21) qui peut y être relié de manière amovible, doté d'une cartouche de filtrage amovible (3) constituée d'un corps en matériau filtrant (30) de forme cylindrique creuse et de deux plaques d'extrémité (31, 32) encastrant ledit corps aux extrémités frontales, dont l'une de ces plaques d'extrémité (31) présente un orifice central (31'), la cartouche de filtrage (3) pouvant être emboîtée, en commençant par la plaque d'extrémité (31) présentant l'orifice, sur un tube vertical (4) central formant une partie du carter de filtre (2), un anneau de verrouillage (5) étant monté coulissant axialement sur le tube vertical (4), l'anneau de verrouillage (5) étant sollicité par une force s'appliquant dans le sens de sortie en direction de l'extrémité libre du tube vertical (4), un mécanisme de verrouillage (40) empêchant dans une position de sortie que l'anneau de verrouillage (5) ne soit enfoncé, des moyens de déverrouillage (33) étant prévus sur la cartouche de filtrage (3), lesquels actionnent le mécanisme de verrouillage (40) dans le sens de déverrouillage lorsque la cartouche de filtrage (3) est enfilée sur le tube vertical (4) et permettent que soient enfoncés l'anneau de verrouillage (5) et la cartouche de filtrage (3), et lorsque la cartouche de filtrage (3) est montée dans le carter de filtre (2) un joint (36) prévu au niveau de la plaque d'extrémité (31) ou de l'anneau de verrouillage (5) séparant en coopération avec une surface hermétisante (26) du carter de filtre (2) une face brute (10) d'une face pure (11) du filtre (1),
**caractérisé en ce**
**que** lorsque l'anneau de verrouillage (5) se trouve en position de sortie et la cartouche de filtrage (3), elle, en appui axial contre l'anneau de verrouillage (5) le joint (36) prévu à la plaque d'extrémité (31) de la cartouche de filtrage (3) ou à l'anneau de verrouillage (5) est maintenu, dans le sens de sortie, axialement à distance de la surface hermétisante correspondante (26) du carter de filtre (2) et dans la position non hermétisante à distance de la surface hermétisante (26) par le mécanisme de verrouillage (40), et
**que** lorsque la cartouche de filtrage (3) ou l'anneau de verrouillage (5) se trouvent en position d'engagement lorsque le mécanisme de verrouillage (40) est déverrouillé, la surface hermétisante (26) et le joint (36) coopèrent de manière hermétisante.

2. Filtre selon la revendication 1, **caractérisé en ce que** le carter de filtre (2) a un plancher (25) doté d'une partie de plancher (25') centrale de forme cylindrique creuse et que la surface hermétisante (26) disposée du côté du carter de filtre est agencée sur une surface de circonférence intérieure ou surface de circonférence extérieure ou surface frontale de la partie de plancher (25') de forme cylindrique creuse.

3. Filtre selon la revendication 1 ou 2, **caractérisé en ce que** les moyens de déverrouillage (33) sont agencés ou rapportés à la cartouche de filtrage (3) ou à un corps de moyens de déverrouillage séparé et emboîtable sur le tube vertical (4) avant la cartouche de filtrage (3).

4. Filtre selon la revendication 3, **caractérisé en ce que** les moyens de déverrouillage (33) sont agencés ou rapportés à la plaque d'extrémité (31) de la cartouche de filtrage (3) présentant l'orifice (31') ou à un corps de support (30') agencé à l'intérieur du corps en matériau filtrant (30) entre les plaques d'extrémité (31, 32) et formant une partie de la cartouche de filtrage (3).

5. Filtre selon l'une quelconque des revendications 1 à 4, **caractérisé en ce que** le mécanisme de verrouillage (40) est formé par des languettes d'arrêt (41) solidaires au tube vertical (4) ou réalisées d'un seul tenant avec celui-ci et mobiles dans le sens radial, pourvues chacune d'une surface d'arrêt (41') orientée dans le sens axial, que les languettes d'arrêt (41) sont sollicitées par une force s'appliquant dans le sens de verrouillage et bloquent chacune avec leur surface d'arrêt (41') l'anneau de verrouillage (5) dans sa position de sortie contre un enfoncement axial par rapport au tube vertical (4), et que par les moyens de déverrouillage (33) les languettes d'arrêt (41) peuvent coulisser dans leur position de déverrouillage directement dans le sens radial lorsque la cartouche de filtrage (3) est enfilée sur le tube vertical (4).

6. Filtre selon la revendication 5, **caractérisé en ce que** l'anneau de verrouillage (5) est de forme cylindrique creuse et est mis à l'extérieur sur le tube vertical (4), et que les languettes d'arrêt (41) sont prévues sur le tube vertical (4) et présentent chacune un ergot d'arrêt orienté de manière radiale vers l'extérieur, les ergots d'arrêt pouvant être engagés avec et désengagés d'une extrémité frontale de l'anneau de verrouillage (5).

7. Filtre selon la revendication 5 ou 6, **caractérisé en ce que** les languettes d'arrêt (41) présentent chacune une came (43) en saillie radiale dans le sens de verrouillage et que lorsque la cartouche de filtrage (3) est enfilée sur le tube vertical (4), les moyens de déverrouillage (33) sont engagés avec les cames (43) et basculent les languettes d'arrêt (41) de manière radiale dans le sens de déverrouillage.

8. Filtre à liquide selon l'une quelconque des revendications 5 à 7, **caractérisé en ce qu'**à chaque languette d'arrêt (41) est associée une butée limitant son mouvement dans le sens de verrouillage.

9. Filtre selon l'une quelconque des revendications 1 à 4, **caractérisé en ce que** le mécanisme de verrouillage (40) est formé par des moyens de guidage (45 et 55) agencés sur la circonférence extérieure du tube vertical (4) et sur la circonférence intérieure de l'anneau de verrouillage (5), qui forment ensemble un niveau de verrouillage (45') et un guidage suivant oblique ou axial et, qui plus est, décalé dans le sens de la circonférence, que les moyens de guidage (45 et 55) bloquent, au moyen du niveau de verrouillage (45'), l'anneau de verrouillage (5) dans sa position de sortie contre l'enfoncement axial par rapport au tube vertical (4), et que, lorsque la cartouche de filtrage (3) est enfilée sur le tube vertical (4), l'anneau de verrouillage (5) peut être tourné par les moyens de déverrouillage (33) dans le sens de la circonférence dans une position de déverrouillage pour être ensuite enfoncé le long du guidage axial ou oblique.

10. Filtre selon l'une quelconque des revendications 1 à 9, **caractérisé en ce que** sont prévus sur la circonférence extérieure du tube vertical (4) des moyens de guidage en position (48) coopérant avec les moyens de déverrouillage (33) ou avec des moyens de guidage (38) agencés en supplément sur la circonférence intérieure de la cartouche de filtrage (3), lesdits moyens de guidage en position contraignant, lorsque la cartouche de filtrage (3) est emboîtée, les moyens de déverrouillage à prendre dans le sens de la circonférence une position permettant l'engagement des languettes d'arrêt (41) du tube vertical (4) ou des plans inclinés (59) de l'anneau de verrouillage (5) pour ensuite bloquer la cartouche de filtrage (3) contre une rotation dans le sens de la circonférence.

11. Filtre selon l'une quelconque des revendications 1 à 10, **caractérisé en ce que** sont prévus des moyens de déverrouillage (33) de réalisations différentes et des mécanismes de verrouillage (40) de réalisations différentes pour former un système verrou-clé codé, une réalisation bien définie du mécanisme de verrouillage (40) ne pouvant être déverrouillée qu'au moyen d'une réalisation bien définie et adéquate des moyens de déverrouillage (33).

12. Filtre selon l'une quelconque des revendications 1 à 11, **caractérisé en ce que** pour former une soupape de contournement de filtre, une plaque d'extrémité (31) de la cartouche de filtrage (3) présente un siège de soupape pour un corps de soupape sollicité par une force s'appliquant dans le sens de la soupape et disposé du côté du carter de filtre.

13. Filtre selon l'une quelconque des revendications 1 à 12, **caractérisé en ce que** le carter de filtre (2) présente dans son plancher (25) un canal d'évacuation (27) agencé de manière excentrée, que la cartouche de filtrage (3) présente sur le côté, opposé au corps en matériau filtrant (30), de la plaque d'extrémité (31) tournée vers le plancher (25), un mandrin obturateur (37) excentré et en saillie axiale pour le canal d'évacuation (27), et que sont prévus sur la circonférence intérieure de la cartouche de filtrage (3) et sur la circonférence extérieure du tube vertical (4) des moyens de guidage en position (38, 48) coopérant qui, lorsque la cartouche de filtrage (3) est emboîtée sur le tube vertical (4) contraignent, dans le sens de circonférence, la cartouche de filtrage (3) dans une position du mandrin obturateur (37) permettant l'engagement du canal d'évacuation (27).
